# EUROPÄISCHE PATENTSCHRIFT

(11) **EP 2 831 161 B1**
(45) Veröffentlichungstag und Bekanntmachung des Hinweises auf die Patenterteilung: **18.11.2015**
(21) Anmeldenummer: 13713409.4
(22) Anmeldetag: 26.03.2013
(51) Int. Cl.: C08K 5/00, C08K 5/47, A01N 43/78, A61K 31/381, C08L 27/06

(54) **FUNGIZIDFORMULIERUNGEN FÜR WEICH PVC**
FUNGICIDE FORMULATIONS FOR PLASTICIZED PVC
FORMULATIONS FONGICIDES POUR DES PVC SOUPLES

(30) Priorität: 28.03.2012 EP 12161923; 23.04.2012 EP 12165125
(43) Veröffentlichungstag der Anmeldung: 04.02.2015
(73) Patentinhaber: Lanxess Deutschland GmbH, 51369 Leverkusen (DE)
(72) Erfinder: UHR, Hermann, 51373 Leverkusen (DE); BÖTTCHER, Andreas, 50859 Köln (DE); JAETSCH, Dr. Thomas, 50933 Köln (DE)
(86) Internationale Anmeldenummer: PCT/EP2013/056407
(87) Internationale Veröffentlichungsnummer: WO 2013/144147

(56) Entgegenhaltungen:
- WO-A1-99/43206
- WO-A1-2007/042416
- WO-A2-2008/075014
- DE-A1- 10 146 189

## Beschreibung

Die vorliegende Erfindung betrifft stabile Zusammensetzungen für die fungizide Ausrüstung von PVC, enthaltend mindestens Thiabendazol als Wirkstoff, mindestens einen Weichmacher für PVC, mindestens ein Thixotropiermittel und gegebenenfalls weitere fungizide Wirkstoffe, sowie Methoden zur Herstellung dieser Formulierungen und deren Verwendungen zum Schutz von PVC gegen den Befall und die Zerstörung durch Mikroorganismen. Außerdem betrifft die Erfindung schimmelfeste PVC-Massen, die mit den erfinderischen Zusammensetzungen ausgerüstet wurden.

Seit Einführung der ersten künstlichen Polymere im 19. Jahrhundert spielt auch der Befall und der Abbau von Polymeren durch Mikroorganismen, wie z.B. Pilzen eine große Rolle. Die Neigung, von Mikroorganismen angegriffen und ggf. zersetzt zu werden, hängt stark von der Struktur der Polymere und den verwendeten Zuschlagsstoffen ab. Flexibles Polyvinylchlorid, welches z.B. für Folien für Schwimmbecken, Teiche und Sammelbecken, Textilien, Duschvorhänge, Bodenabdichtungen, -beläge und -abdeckungen, Sitzbezüge, flexible Dichtungen für Kühlschränke und Waschmaschinen, Abdichtungen für den Dachbau etc. verwendet wird, ist wegen seines hohen Anteils an Weichmachern und anderen Additiven besonders empfindlich gegenüber dem Befall durch Mikroorganismen. Zum Schutz gegenüber Mikroorganismen wird Weich-PVC deshalb mit antimikrobiellen Mitteln ausgestattet. Zur Zeit wird immer noch ein großer Teil mit dem toxikologisch sehr bedenklichen 10'-Oxybisphenoxyarsine (OBPA) ausgerüstet. Als Alternativen werden zunehmend 2-n-Octyl-4-isothiazolin-3-one (OIT) oder 4,5-Dichlor-2-n-octyl-4-isothiazolin-3-one (DCOIT) eingesetzt, die aber beide aufgrund ihrer stark sensibilisierenden Eigenschaften ebenfalls mit Problemen behaftet sind. (W. Paulus, Directory of microbicides for the protection ofmaterials; Springer 2005, p.325 - 345; ISBN 1-4020-2817-2).

Die günstigen toxikologischen Eigenschaften machen Thiabendazol zu einem idealen Fungizid für die Ausrüstung von Kunststoffen, wie z.B. PVC.

Es ist bereits in einer Vielzahl an Patentanmeldungen und Veröffentlichungen der Einsatz von Thiabendazol, sowie Zusammensetzungen von Thiabendazol mit anderen Fungiziden zur antifungischen Ausrüstung von Weich-PVC beschrieben.

JP 08059937 beschreibt antibakteriell und antifungisch ausgerüstete PVC-Filme, die z.B. Thiabendazol als fungiziden Wirkstoff enthalten.

JP 02225548 beansprucht Thiazolylderivate, wie auch Thiabendazol zur Schimmelausrüstung von Vinyl Chlorid Polymeren.

In Borgmann-Strahsen, R.; Bessems,E. Kunststoffe 84 (1994) 158 - 162 werden Zusammensetzungen aus Thiabendazol und n-Octylisothiazolinon beschrieben, die einen guten Schutz von PVC gegenüber Schimmelbefall gewährleistet.

In der WO 2008075014 werden antifungische Formulierungen beschrieben, die einen Weichmacher enthalten, und hieraus hergestellte oder beschichtete Artikel. Bei den Fungiziden handelt es sich um Fludioxonil und/oder Difenoconazole, wobei auch Thiabendazol als optionaler Mischpartner genannt ist.

DE 10146189 beansprucht schimmelfreie PVC-Zusammensetzungen für Kühlschranktürdichtungen, die als fungizide Komponente Carbendazim, Thiabendazol, Tebuconazole oder Zinkpyrithion enthalten.

Gemische aus Thiabendazol und Weichmachern stellen häufig Suspensionen oder Dispersionen dar, da Thiabendazol in den gebräuchlichen Weichmachern nicht bzw. nur schlecht löslich ist. In diesen Suspensionen neigt Thiabendazol zur Agglomeration und Sedimentation. Daher können entsprechende Zusammensetzungen nicht mehr ohne weitere technischen Aufwand gleichmäßig in ein Polymer eingearbeitet werden.

Eine Aufgabe der vorliegenden Erfindung bestand somit darin, eine sedimentations- und lagerstabile Formulierung von Thiabendazol und ggf. anderen Fungiziden in Weichmachern herzustellen, die problemlos in das PVC einzuarbeiten ist.

Diese Aufgabe wird vorteilhafterweise durch eine Zusammensetzung aus Thiabendazol, dessen Salze oder Säureadditionsverbindungen, mindestens einem Weichmacher und mindestens einem Thixotropiermittel gelöst.

Gegenstand der Erfindung sind daher Zusammensetzungen enthaltend Thiabendazol, dessen Salze oder Säureadditionsverbindungen, mindestens einen Weichmacher und mindestens ein Thixotropiermittel.

Zusammensetzungen im Sinne der Erfindung stellen Gemische dar, die in verschiedenen Zustandsformen vorliegen können. Die erfindungsgemäßen Zusammensetzungen stellen bevorzugt Dispersionen dar.

Bei den Weichmachern kann es sich um alle Stoffe handeln, mit denen man Kunststoffe, bevorzugt thermoplastische Polymere und insbesondere PVC weich und flexibel machen kann.

Bevorzugt handelt es sich hierbei um Phthalate, wie insbesondere Diethylhexylphthalat (DEHP), Dibutylphthalat (BBP), Diisononylphthalat (DINP), Diisodecylphthalat (DIDP), Diisooctylphthalat (DNOP), Diisobutylphthalat (DIBP), Diisohexylphthalat, Diisoheptylphthalat, Di-n-octylphthalat, Diisoundecylphthalat, Diisotredecylphthalate; um Adipate, wie insbesondere Diethylhexyladipat (DEHA), Diisooctyladipat, Diisononyladipat, Polyester der Adipinsäure oder Glutarsäure wie insbesondere Ultramoll^{®} IV der Lanxess Deutschland GmbH; Trialkylester der Zitronensäure oder acetylierte Trialkylester der Zitronensäure, wie insbesondere Acetyltributylcitrat (ATBC); Ester der Trimellitsäure, wie insbesondere Tri(2-ethylhexyl)trimellitat, Tri(isooctyl)trimellitat, Triisononyl)trimellitat; 1,2-Dicyclohexylbasierte Weichmacher wie insbesondere 1,2-Cyclohexandicarbonsäurenonylester (Hexamoll®, DINCH); Alkylsulfonsäureester des Phenols, wie insbesondere Mesamoll^{®} der Lanxess Deutschland GmbH (CAS-Nr.091082-17-6); Acetylierte Mono- und Diglyceride; Benzoesäurediester, insbesondere von Dialkylenglycolen, wie insbesondere Dipropylenglycoldibenzoat, oder Isononylbenzoat; Trimethylolpropanester wie insbesondere Trimethylolpropan-benzoat-2-ethylhexanoat-Gemische; Dialkylester der Terephthalsäure, wie insbesondere Di-2-ethylhexylterephthalat.

Als Weichmacher können auch epoxidierte Fettsäuren, epoxidierte Fettsäureester und epoxidierte Fettsäureglyceride eingesetzt werden. Diese epoxidierten Fettsäuren, epoxidierten Fettsäureestern und epoxidierten Fettsäureglyceride können durch aus dem Stand der Technik bekannten Verfahren wie z.B. der Epoxidierung der korrespondierenden Fettsäuren, Fettsäureester und Fettsäureglyceride hergestellt werden oder durch Veresterung der epoxidierten Fettsäuren mit ein-, zwei-, oder dreiwertigen Alkoholen, wie insbesondere Glycerin hergestellt werden oder stellen natürlich epoxidierte Fettsäuren wie insbesondere 12-(R),13-(S)-Epoxy-9-cis-Octadecensäure (Vernolsäure) dar.

Als epoxidierte Fettsäuren können insbesondere die Epoxide der einfach ungesättigte Fettsäuren wie (10Z)- Undeca- 10- ensäure, (9*Z*)- Tetradeca- 9- ensäure, (9*Z*)- Hexadeca- 9- ensäure, (6*Z*)-Octadeca- 6- ensäure, (9*Z*)- Octadeca- 9- ensäure, (9E)- Octadeca- 9- ensäure, (11*E*)- Octadeca-11- ensäure, (9*Z*)- Eicosa- 9- ensäure, (11*Z*)- Eicosa- 11- ensäure, (11*Z*)- Docosa- 11- ensäure, (13*Z*)- Docosa- 13- ensäure oder (15*Z*)- Tetracosa- 15- ensäure, oder der zweifach ungesättigte Fettsäuren, wie insbesondere (9*Z*,12*Z*)- Octadeca- 9,12- diensäure, 9-cis-Octadecensäure oder 12-Hydroxy-9-cis-octadecensäure oder der dreifach ungesättigte Fettsäuren wie insbesondere (6*Z*,9*Z*,12*Z*)- Octadeca- 6,9,12- triensäure, (9*Z*,12*Z*,15*Z*)- Octadeca- 9,12,15- triensäure, (8*E*,10*E*,12*Z*)- Octadeca- 8,10,12- triensäure, (9*Z*,11*E*,13*Z*)- Octadeca- 9,11,13- triensäure, (9*Z*,11*E*,13*E*)- Octadeca- 9,11,13- triensäure, (9*E*,11*E*,13*E*)- Octadeca- 9,11,13- triensäure oder mehrfach ungesättigter Fettsäuren wie insbesondere (5*Z*,8*Z*,11*Z*,14*Z*)- Eicosa- 5,8,11,14-tetraensäure, (5*Z*,8*Z*,11*Z*,14*Z*,17*Z*)- Eicosa- 5,8,11,14,17- pentaensäure, (7*Z*,10*Z*,13*Z*,16*Z*,19*Z*)-Docosa- 7,10,13,16,19- pentaensäure, (4*Z*,7*Z*,10*Z*,13*Z*,16*Z*,19*Z*)- Docosa- 4,7,10,13,16,19-hexaensäure eingesetzt werden.

Falls Epoxide als Weichmacher eingesetzt werden, werden besonders bevorzugt Trigylceride aus epoxidierten Fettsäuren eingesetzt, deren Fettsäuren eine Kohlenstofflänge von 17 bis 23 C-Atomen aufweisen und mindestens eine Epoxidgruppe enthalten.

Ganz besonders bevorzugt können folgende Epoxide auch als Weichmacher eingesetzt werden: Leinölepoxidate, Vernoniaölepoxidate, Sonnenblumenölepoxidate, Rhizunusölepoxidate und Sojaölepoxidate, wie insbesondere epoxidiertes Sojaöl (CAS-Nr. 8013-07-8).

Die Weichmacher können hierbei entweder als Einzelkomponente eingesetzt werden oder aber auch aus Zusammensetzungen mehrerer Weichmacher bestehen.

Bei den Thixotropiermitteln kann es sich im allgemeinen um alle Stoffe handeln, die in der Lage sind, Dispersionen von Thiabendazol und ggf. anderen Fungiziden in Weichmachern zu stabilisieren und somit vor einer Sedimentation der Wirkstoffe zu bewahren. In den erfindungsgemäßen Zusammensetzungen werden durch die Thixotropiermittel Dispersionen mit einer Viskosität bei 20 °C von 100 bis 3000 mPas, vorzugsweise von 150 bis 2500 mPas, gemessen bei einer angelegten Scherkraft von 30 s^{-1,} erzeugt.

Bevorzugt handelt es sich bei den Thixotropiermitteln, um Rizinusölderivate oder um Mono- Di oder Triglyceride aus Rizinolsäurederivaten, insbesondere Mono- Di oder Triglyceride aus (12*R*)-*cis*-12-Hydroxyoctadec-9-ensäure, (9*Z*,12*R*)-12-Hydroxyoctadec-9-ensäure oder 12-Hydroxyoctadecansäure, Ester oder Amide der Rizinolsäure oder deren Salze.

Besonders bevorzugt handelt es sich bei den Thixotropiermitteln um Rizinusölderivate, wie z.B. hydriertes Rizinusöl, sulfatiertes Rizinusöl (CAS 8002-33-3), mit Polyamiden oder Fettsäureamiden derivatisiertes Rizinusöl, insbesondere Luvotix^{®} HT der Fa. Lehmann & Voss, Hamburg, Germany, anorganisch modifiziertes Rizinusöl, silikatmodifiziertes Rizinusöl, wie insbesondere Luvotix^{®} ZR 50 der Fa. Lehmann & Voss, Hamburg, Germany, modifizierte Polyamide, wie Rilanit^{®} plus der Fa. Cognis, modifizierte Polyamidwachse, wie insbesondere Luvotix^{®} HP der Fa. Lehmann & Voss, Hamburg, Germany, thixotropierend wirkende Polyolefine wie insbesondere Luvotix^{®} P25x oder Luvotix^{®} P50 der Fa. Lehmann & Voss, Hamburg, Germany, Thixotropierend wirkende Alkydharze, die z.B. Harnstoffstrukturen aufweisen oder urethanisiert sind oder Triglyceride aus Rizinolsäurederivaten, insbesondere Triglyceride aus (12*R*)-*cis*-12-Hydroxyoctadec-9-ensäure, (9*Z*,12*R*)-12-Hydroxyoctadec-9-ensäure oder 12-Hydroxy-octadecansäure, Ester oder Amide der Rizinolsäure oder deren Salze. Die Triglyceride der Rizinolsäurederivate, der Rizinolsäure oder der hydrierten Rizinolsäure (12-Hydroxy-octadecansäure) deren Ester oder deren Amide sowie deren Salze können in Zusammensetzungen eingesetzt werden, die gegebenenfalls weitere gesättigte, ungesättigte, verzweigte oder unverzweigte Fettsäuren enthalten. Bevorzugt werden die Triglyceride der Rizinolsäurederivate, der Rizinolsäure oder der hydrierten Rizinolsäure (12-Hydroxyoctadecansäure) deren Ester oder deren Amide sowie deren Salze in den erfindungsgemäßen Zusammensetzungen eingesetzt.

Ganz besonders bevorzugt wird als Rizinusölderivat hydriertes Rizinusöl (CAS-Nr. 8001-78-3), wie es beispielsweise im Luvotix^{®} R der Fa. Lehmann & Voss, Hamburg, Germany, enthalten ist, eingesetzt.

Es können auch weitere Thixotropiermitteln oder Zusammensetzungen aus Thixotropiermitteln eingesetzt werden. Die einsetzbaren Thixotropiermittel sind im allgemeinen kommerziell erhältlich und werden normalerweise auch für lösungsmittelbasierte Farben gegen ein Absetzen der Pigmente eingesetzt.

Bei Thiabendazol handelt es sich um 2-(4-Thiazolyl)-1H-benzimidazol.

Neben dem Thiabendazol können die Zusammensetzungen gegebenenfalls auch noch ein oder weitere fungizide Wirkstoffe enthalten. Hierdurch kann die Schimmelfestigkeit im PVC nochmals erhöht werden. Häufig beobachtet man hier auch zusätzlich synergistische Effekte.

Im allgemeinen können alle Fungizide hierzu eingesetzt werden, die eine Wirkung gegenüber Schimmelpilzen haben. Auch hier können Zusammensetzungen eingesetzt werden um die Wirkung weiter zu verbessern.

Bevorzugt handelt es sich bei den Fungiziden um
Triazole wie:
   Azaconazol, Azocyclotin, Bitertanol, Bromuconazol, Cyproconazol, Diclobutrazol, Difenoconazol, Diniconazol, Epoxyconazol, Etaconazol, Fenbuconazol, Fenchlorazol, Fenethanil, Fluquinconazol, Flusilazol, Flutriafol, Furconazol, Hexaconazol, Imibenconazol, Ipconazol, Isozofos, Myclobutanil, Metconazol, Paclobutrazol, Penconazol, Propioconazol, Prothioconazol, Simeoconazol, (±)-cis-1-(4-chlorphenyl)-2-(1H-1,2,4-triazol-1-yl)-cycloheptanol, 2-(1-tert-Butyl)-1-(2-chlorphenyl)-3-(1,2,4-triazol-1-yl)-propan-2-ol, Tebuconazol, Tetraconazol, Triadimefon, Triadimenol, Triapenthenol, Triflumizol, Triticonazol, Uniconazol sowie deren Metallsalze und Säureaddukte;
Imidazole wie:
   Clotrimazol, Bifonazol, Climbazol, Econazol, Fenapamil, Imazalil, Isoconazol, Ketoconazol, Lombazol, Miconazol, Pefurazoat, Prochloraz, Triflumizol, Thiazolcar 1-Imidazolyl-1-(4'-chlorophenoxy)-3,3-dimethylbutan-2-on sowie deren Metallsalze und Säureaddukte;
Pyridine und Pyrimidine wie:
   Ancymidol, Buthiobat, Fenarimol, Mepanipyrin, Nuarimol, Pyroxyfur, Triamirol;
Succinat-Dehydrogenase Inhibitoren wie:
   Benodanil, Carboxim, Carboximsulfoxid, Cyclafluramid, Fenfuram, Flutanil, Furcarbanil, Furmecyclox, Mebenil, Mepronil, Methfuroxam, Metsulfovax, Nicobifen, Pyrocarbolid, Oxycarboxin, Shirlan, Seedvax;
Naphthalin-Derivate wie:
   Terbinafin, Naftifin, Butenafin, 3-Chloro-7-(2-aza-2,7,7-trimethyl-oct-3-en-5-in);
Sulfenamide wie:
   Dichlorfluanid, Tolylfluanid, Folpet, Fluorfolpet; Captan, Captofol;
Benzimidazole wie:
   Carbendazim, Benomyl, Fuberidazole oder deren Salze;
Morpholinderivate wie:
   Aldimorph, Dimethomorph, Dodemorph, Falimorph, Fenpropidin, Fenpropimorph, Tridemorph, Trimorphamid und ihre arylsulfonsauren Salze, wie z.B. p-Toluolsulfonsäure und p-Dodecylphenylsulfonsäure;
Benzthiazole wie:
   2-Mercaptobenzothiazol;
Benzthiophendioxide wie:
   Benzo[b]thiophen-S,S-dioxid-carbonsäurecyclohexylamid;
Benzamide wie:
   2,6-Dichloro-N-(4-trifluoromethylbenzyl)-benzamid, Tecloftalam;
Borverbindungen wie:
   Borsäure, Borsäureester, Borax;
Isothiazolinone wie:
   N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinon, 4,5-Benzisothiazolinon;
Thiocyanate wie:
   Thiocyanatomethylthiobenzothiazol, Methylenbisthiocyanat;
quartäre Ammoniumverbindungen und Guanidine wie:
   Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammoniumchlorid, Dioctyldimethylammoniumchlorid, N-Hexadecyltrimethylammoniumchlorid, 1-Hexadecylpyridiniumchlorid, Iminoctadine-tris(albesilat);
Iodderivate wie:
   Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-butylcarbamat, 3-Iod-2-propinyl-n-hexylcarbamat, 3-Iod-2-propinylcyclohexylcarbamat, 3-Iod-2-propinyl-phenylcarbamat;
Phenole wie:
   Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäuremethylester, p-Hydroxybenzoesäureethylester, p-Hydroxybenzoesäurepropylester, p-Hydroxybenzoesäurebutylester, p-Hydroxybenzoesäureoctylester, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;
Pyridine wie:
   1-Hydroxy-2-pyridinthion (und ihre Cu-, Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
Methoxyacrylate oder Ähnliche wie:
   Azoxystrobin, Dimoxystrobin, Fluoxastrobin, Kresoxim-methyl, Metominostrobin, Orysastrobin, Picoxystrobin, Pyraclostrobin, Trifloxystrobin, 2,4-dihydro-5-methoxy-2-methyl-4-[2-[[[[1-[3-(trifluoromethyl)phenyl]ethylidene]amino]oxy]methyl]phenyl]-3H-1,2,4-triazol-3-one (CAS-Nr. 185336-79-2);
Oxide wie:
   Oxide der Metalle Zinn, Kupfer und Zink wie z.B. Tributylzinnoxid, Cu₂O, CuO, ZnO;
Dithiocarbamate wie:
   Cufraneb, Ferban, Kalium-N-hydroxymethyl-N'-methyl-dithiobarbamat, Na- oder K-dimethyldithiocarbamat, Macozeb, Maneb, Metam, Metiram, Thiram, Zineb, Ziram;
Nitrile wie:
   2,4,5,6-Tetrachlorisophthalodinitril, Dinatrium-cyano-dithioimidocarbamat;
Chinoline wie:
   8-Hydroxychinolin und deren Cu-Salze;
Ag, Zn oder Cu-haltige Zeolithe allein oder eingeschlossen in polymere Werkstoffe.

Ganz besonders bevorzugt handelt es sich bei den Fungiziden um Azaconazol, Bromuconazol, Cyproconazol, Dichlobutrazol, Diniconazol, Difenconazol, Hexaconazol, Metaconazol, Penconazol, Propiconazol, Tebuconazol, Azoxystrobin, Fludioxonil, Dichlofluanid, Tolylfluanid, Fluorfolpet, Methfuroxam, Carboxin, Fenpiclonil, Butenafin, Imazalil, N-Octylisothiazolin-3-on, Dichlor-N-octylisothiazolinon, Mercaptobenzthiazol, Thiocyanatomethyl-thiobenzothiazol, N-Butyl-benzisothiazolinon, 1-Hydroxy-2-pyridinthion (und ihre Cu-, Na-, Fe-, Mn-, Zn-Salze), Tetrachlor-4-methylsulfonylpyridin, 3-Iodo-2-propinyl-n-butylcarbamat, Diiodmethyl-p-tolylsulfon, Bethoxazin, 2,4,5,6-Tetrachlorisophthalodinitril und Carbendazim.

Optional kann man zusätzlich auch Algizide zusetzen um das Algenwachstum auf den PVC Flächen zu verhindern oder Mittel, die durch ihren unangenehmen oder bitteren Geschmack z.B. den Verbiss von Mardern an flexiblen Autoteilen / Dichtungen / Isolierungen verhindern.

Setzt man als zusätzliches Fungizid eine iodhaltige Verbindung ein, so sind die Zusammensetzungen, insbesondere Dispersionen oder Suspensionen, in Kombination mit Thiabendazol in der Lagerung, besonders bei höheren Temperaturen nicht stabil. Die iodhaltigen Fungizide werden bereits nach kurzer Zeit chemisch abgebaut. Dieses ist unterschiedlich von der durch Übergangsmetalle oder Licht induzierten Zersetzung der iodhaltigen Fungizide. Hier ist der Wirkstoff Thiabendazol ursächlich für die Zersetzung.

Als iodhaltige Fungizide sind beispielsweise N-(C₁-C₁₂-Alkyl-iodtetrazole, N-(C₆-C₁₅)-Aryl-iodtetrazole, N-(C₆-C₁₅)-Arylalkyl-iodtetrazole Diiodmethyl-p-tolylsulfon, Diiodmethyl-p-chlorphenylsulfon, 3-Brom-2,3-diiod-2-propenylalkohol, 2,3,3-Triiodallylalkohol, 4-Chlor-2-(2-chlor-2-methylpropyl)-5-[(6-iod-3-pyridinyl)methoxy]-3(2H)-pyridazinone (CAS-RN: 120955-77-3), Iodfenfos, 3-Iod-2-propinyl-2,4,5-trichlorphenylether, 3-Iod-2-propinyl-4-chlorphenylformal (IPCF), N-Iodpropargyloxycarbonyl-alanin, N-Iodpropargyloxycarbonyl-alanin-ethylester, 3-(3-Iodpropargyl)-benzoxazol-2-on, 3-(3-Iodpropargyl)-6-chlorbenzoxazol-2-on, 3-Iod-2-propinyl-alkohol, 4-Chlorphenyl-3-iodpropargylformal,3-Iod-2-propinyl-propyl-carbamat, 3-Iod-2-propinylbutyl-carbamat (IPBC), 3-Iod-2-propinyl-m-chlorphenyl-carbamat, 3-Iod-2-propinyl-phenylcarbamat, Di-(3-Iod-2-propinyl)hexyl-dicarbamat, Diiodmethyl-p-tolylsulfon, 3-Iod-2-propinyloxyethanol-ethylcarbamat, 3-Iod-2-propinyl-oxyethanol-phenyl-carbamat, 3-Iod-2-propinyl-thioxothioethylcarbamat, 3-Iod-2-propinyl-carbaminsäureester (IPC), 3-Brom-2,3-diiod-2-propenylethylcarbamat, 3-Iod-2-propinyl-n-hexylcarbamat und 3-Iod-2-propinyl-cyclohexylcarbamat zu nennen.

Bevorzugt sind iodhaltige Fungizide 3-Iod-2-propinyl-2,4,5-trichlorphenylether, 3-Iod-2-propinyl-4-chlorphenylformal (IPCF), N-Iodpropargyloxycarbonyl-alanin, N-Iodpropargyloxycarbonylalanin-ethylester, 3-(3-Iodpropargyl)-benzoxazol-2-on, 3-(3-Iodpropargyl)-6-chlorbenzoxazol-2-on, 3-Iod-2-propinyl-alkohol, 4-Chlorphenyl-3-iodpropargylformal, 3-Iod-2-propinyl-propylcarbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, Diiodmethyl-p-tolylsulfon, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethylcarbamat, 3-Iod-2-propinyl-n-hexylcarbamat und 3-Iod-2-propinyl-cyclohexylcarbamat.

Besonders bevorzugte iodhaltige Fungizide sind 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethyl-carbamat, 3-Iod-2-propinyl-oxyethanol-phenyl-carbamat, 3-Iod-2-propinyl-thioxo-thioethyl-carbamat, 3-Iod-2-propinyl-carbaminsäureester (IPC), 3-Brom-2,3-diiod-2-propenylethylcarbamat, 3-Iod-2-propinyl-n-hexylcarbamat und 3-Iod-2-propinyl-cyclohexylcarbamat, wobei 3-Iod-2-propinyl-butyl-carbamat (IPBC) und Diiodmethyl-p-tolylsulfon noch weiter bevorzugt ist.

Es wurde nun gefunden, dass eine Zusammensetzung enthaltend Thiabendazol, dessen Salze oder Säureadditionsverbindungen, mindestens einen Weichmacher und mindestens ein Thixotropiermittel und mindestens ein iodhaltiges Fungizid und mindestens ein Epoxid der Zersetzung des IPBC's entgegenwirkt und die Zusammensetzung stabilisiert.

Weiterhin ist von der Erfindung eine Zusammensetzung enthaltend Thiabendazol dessen Salze oder Säureadditionsverbindungen, mindestens ein iodhaltiges Fungizid und mindestens ein Epoxid, umfasst.

Aus dem Stand der Technik sind Methoden bekannt, den Abbau von Iodpropargylverbindungen in übergangsmetallhaltigen, Lösungsmittel-basierten, Alkyd-Harz enthaltenden Farben zu verhindern und so zu stabilisieren. Hierbei ist das Vorhandensein von Übergangsmetalen ursächlich für die Zersetzung der Iodpropargylverbindungen. So ist beispielsweise der Zusatz von Chelatisierungsreagenzien (WO 98/22543 A), organischen Epoxiden (WO 00/16628 A, 2-(2-Hydroxyphenyl)-benzotriazolen (WO 2007/028527 A) oder Azolverbindungen (WO 2007/101549 A) bekannt.

Des Weiteren sind Methoden bekannt, durch Epoxide (US 4,276,211, US 4,297,258), gegebenenfalls in Verbindung mit UV-Absorbern (WO 99/29176 A) oder Benzyliden-Campfer-Derivaten (US 6,472,424), Tetraalkylpiperidinverbindungen und/oder UV-Absorbern (EP 0 083 308 A) die lichtinduzierte Verfärbung von Iodprogargylverbindungen in wasserbasierten Anstrichfarben zu reduzieren.

Im Allgemeinen kann es sich um alle Verbindungen handeln, die eine oder mehrere Epoxidgruppen im Molekül enthalten und ansonsten mit Thiabendazol, den weiteren Fungiziden und Hilfsstoffen kompatibel sind und einen Siedepunkt oberhalb der Verarbeitungstemperatur des PVC haben. Verbindungen, die eine oder mehrere Epoxidgruppen im Molekül enthalten, werden im weiteren als "Epoxide" bezeichnet. Die im Rahmen der Erfindung als Stabilisatoren einsetzbaren Epoxide haben im allgemeinen einen Siedepunkt größer 180 °C und bevorzugt einen Siedepunkt größer 200 °C.

Zu den bevorzugten zur Stabilisierung einsetzbaren Epoxiden gehören die folgenden Verbindungen: 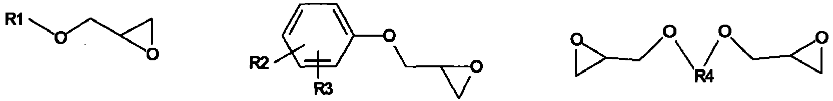 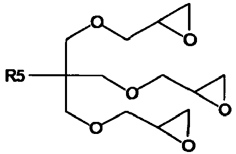 wobei
R¹ C₁-C₂₀-Alkyl
R² H, Alkyl, substituiertes Alkyl,
R³ Halogen,
R⁴ C₁-C₂₀-Alkyl und
R⁵ H, C₁-C₂₀-Alkyl, bevorzugt Methyl oder Ethyl
bedeuten,
sowie bevorzugt Epoxide wie
1-Methyl-4-(1-methylethenyl)-7-oxabicyclo[4.1.0]heptane (CAS-RN 1195-92-2), 1-Methyl-4-(2-methyl-2-oxiranyl)-7-oxabicyclo[4.1.0]heptane (CAS-RN 96-08-2), 2,2'-[1,4-Cyclohexanediylbis(methyleneoxymethylene)]bis-oxirane (CAS-RN 14228-35-5), 2,2'-[(1-Methylethylidene)bis(4,1-phenyleneoxymethylene)]bis-oxirane (CAS-RN 1675-54-3), 3-(2-Oxiranyl)-7-oxabicyclo[4.1.0]heptane (CAS-RN 106-87-6), 7-Oxabicyclo[4.1.0]hept-3-ylmethyl-7-oxabicyclo[4.1.0]heptane-3-carboxylic acid ester (CAS-RN 2386-87-0), 1,6-Bis(7-oxabicyclo[4.1.0]hept-3-ylmethyl)-hexanedioic acid ester (CAS-RN 3130-19-6) sowie weitere Epoxide, die hergestellt werden durch die Epoxidierung von Doppelbindungen in ungesättigten Festtsäuren, Fettsäureestern und Fettsäureglyceriden. Die zur Stabilisierung einsetzbaren Epoxide der ungesättigten Fettsäuren, Fettsäureester und Fettsäureglyceride können gleichzeitig auch als Weichmacher verwendet werden. In ihrer Funktion als Stabilisatoren sind sie aber in wesentlich geringeren Konzentrationen wirksam.

Daher können die als Weichmacher einsetzbaren, epoxidierte Fettsäuren, epoxidierten Fettsäureester oder epoxidierten Fettsäureglyceride ebenfalls als Stabilisatoren verwendet werden. Bevorzugt werden die als Weichmacher einsetzbaren Epoxide auch als Stabilisatoren verwendet.

Die epoxidierten Fettsäureester oder epoxidierten Fettsäureglyceride können nach dem Fachmann bekannten Verfahren, wie z.B. durch Veresterung der epoxidierten Fettsäuren mit ein-, zwei-, oder dreiwertigen Alkoholen, wie insbesondere Glycerin, hergestellt werden.

Als Epoxide zur Stabilisierung der iodhaltigen Fungizide werden besonders bevorzugt epoxidierten Fettsäureglyceride, epoxidierten Fettsäureester oder epoxidierte Fettsäuren eingesetzt, deren Fettsäuren eine Kohlenstofflänge von 17 bis 23 C-Atomen aufweisen und die mindestens eine Epoxidgruppe enthalten.

Ganz besonders bevorzugt handelt es sich bei den Epoxiden zur Stabilisierung um Leinölepoxidate, Vernoniaölepoxidate, Sonnenblumenölepoxidate und Sojaölepoxidate insbesondere epoxidiertes Sojaöl (CAS-Nr. 8013-07-8).

Falls im erfindungsgemäßen Verfahren als Weichmacher Epoxide eingesetzt werden, können zusätzliche, weitere Epoxide als Stabilisatoren eingesetzt werden. Bevorzugt werden dann keine zusätzliche Epoxide als Stabilisatoren eingesetzt.

Um die Eigenschaften, wie Temperaturempfindlichkeit, UV-Stabilität, Oxidationsstabilität der Dispersionen selbst, der Dispersionen bei der Einarbeitung in das PVC und der daraus hergestellten PVC Zubereitungen noch weiter zu verbessern, können weitere Stabilisatoren eingesetzt werden.

Bei den weiteren gegebenenfalls einsetzbaren Stabilisatoren kann es sich um Antioxidantien, Radikalfängern oder UV-Absorbern handeln. Gegebenenfalls können ein oder mehrere dieser Stoffe eingesetzt werden.

Beispielhaft seien als weitere Stabilisatoren genannt:
sterisch gehinderten Phenole, wie
2,6-Di-tert.-butyl-4-methylphenol, 2-tert.-butyl-4,6-dimethylphenol, 2,6-Di-cyclopentyl-4-methylphenol, 2-(α-Methylcyclohexyl)-4,6-dimethylphenol, 2,6-Di-octadecyl-4-methylphenol oder 2,6-Di-tert.-butyl-4-methoxymethylphenol, Diethyl-(3,5-di-tert-butyl-4-hydroxybenzyl)phosphonate, 2,4-Dimethyl-6-(1-methylpentadecyl)-phenol, 2-Methyl-4,6-Bis[(octylthio)methyl]-phenol, 2,6-Di-tert.-butyl- 4-methoxyphenol, 2,5-Di-tert.-butyl-hydrochinon, 2,5-Di-tert.-amyl-hydrochinon, 2,6-Diphenyl-4-octadecyloxyphenol, 2,2'-Thio-bis-(6-tert.-butyl-4-methylphenol), 2,2'-Thio-bis-(4-octylphenol), 4,4'-Thio-bis-(6-tert.-butyl-3-methylphenol), 4,4'-Thio-bis-(6-tert.-butyl-2-methylphenol), 2,2'-Methylen-bis-(6-tert.-butyl-4-methylphenol), 2,2'-Methylen-bis-(4-methyl-6-cyclohexylphenol), 2,2'-Methylen-bis-(4,6-di-tert.-butylphenol), 2,2'-Ethyliden-bis-(4,6-di-tert.-butylphenol), 4,4'-Methylen-bis-(2,6-di-tert.-butylphenol), 4,4'-Methylen-bis-(6-tert.-butyl- 2-methylphenol), 1,1-Bis-(5-tert.-butyl-4-hydroxy2-methylphenyl)-butan, 1,1,3-Tris-(5-tert.-butyl-4-hydroxy-2-methylphenyl)-butan, 1,3,5-Tri-(3,5-di-terk.-butyl-4-hydroxybenzyl)-2,4,6-trimethylbenzol, 3,5-Di-tert.-butyl-4-hydroxy-benzyl-mercaptoessigsäure-isooctylester, 1,3,5-Tris-(3,5-di-tert.-butyl-4-hydroxybenzyl)- isocyanurat, 1,3,5-Tris-(4-tert.butyl-3-hydroxy-2,6dimethylbenzyl)-isocyanurat, 1,3,5-Tris[(3,5-di-tert-butyl-4-hydroxyphenyl)propionyloxyethyl] isocyanurate, 3,5-Di-tert.-butyl-4-hydroxybenzyl-phosphonsäure-dioctadecylester, 3,5-Di-tert.butyl-4-hydroxybenzyl-phosphonsäure-monoethylester-Calcium-salz, N,N'-Di-(3,5-di-tert.-butyl-4-hydroxyphenylpropionyl)-hexamethylendiamin, N,N`-Di-(3,5-di-tert.-butyl-4-hydroxyphenylpropionyl)-trimethylendiamin, N,N'-Di-(3,5-di-tert-butyl-4-hydroxyphenyl-propionyl)-hydrazin, 3,9-Bis[1,1-dimethyl-2-[(3-tert-butyl-4-hydroxy-5-methylphenyl)propionyloxy]ethyl]-2,4,8,10-tetraoxaspiro[5.5]undecane, Bis-[3,3-bis(4'-hydroxy-3'-tert-butylphenyl)butanoic acid] ethylene glycol ester, 2,6-bis[[3-(1,1-dimethylethyl)-2-hydroxy-5-methylphenyl]octahydro-4,7-methano-1H-indenyl]-4-methyl-phenol (= Wingstay L), 2,4-Bis(n-octylthio)-6-(3,5-di-tert-butyl-4-hydroxyphenylamino)-s-triazine, N-(4-Hydroxyphenyl)octadecanamide, 2,4-Di-tert-butylphenyl 3',5'-di-tert-butyl-4'-hydroxybenzoate, (Benzoic acid, 3,5-bis(1,1-dimethylethyl)-4-hydroxy-, hexadecyl ester), 3-Hydroxyphenyl benzoate, 2,2'-Methylenebis(6-tert-butyl-4-methylphenol) monoacrylate, 2-(1,1-dimethylethyl)-6-[1-[3-(1,1-dimethylethyl)-5-(1,1-dimethylpropyl)-2-hydroxyphenyl]ethyl]-4-(1,1-dimethylpropyl)-phenyl ester,

Ester der ß-(3,5-Di-tert.-butyl-4-hydroxyphenyl)-propionsäure mit ein- oder mehrwertigen Alkoholen wie insbesondere mit Methanol, Octadecanol, 1,6-Hexandiol, Neopentylglycol, Thiodiethylenglycol, Diethylenglycol, Triethylenglycol, Pentaerythrit, Tris-hydroxyethylisocyanurat oder Di-hydroxyethyl-oxalsäurediamid, Ester der ß-(5-tert-Butyl-4-hydroxy-3-methylphenyl)-propionsäure mit ein- oder mehrwertigen Alkoholen, wie insbesondere mit Methanol, Octadecanol, 1,6-Hexandiol, Neopentylglycol, Thiodiethylenglycol, Diethylenglycol, Triethylenglycol, Pentaerythrit, Tris-hydroxyethylisocyanurat oder Di-hydroxyethyl-oxalsäurediamid.
Gehinderte Amine wie,
   Bis(1,2,2,6,6-pentamethyl-4-piperidyl) 2-(3,5-di-tert-butyl-4-hydroxybenzyl)-2-butyl malonate, Bis(2,2,6,6-tetramethyl-4-piperidyl) decanedioate, Dimethyl succinate-1-(2-hydroxyethyl)-4-hydroxy-2,2,6,6-tetramethylpiperidine copolymer, Poly[[6-[(1,1,3,3-tetramethylbutyl)amino]-1,3,5-triazine-2,4-diyl][(2,2,6,6-tetramethyl-4-piperidyl)imino]hexamethylene[(2,2,6,6-tetramethyl-4-piperidyl)imino]] (CAS-Nr 71878-19-8), 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane (CAS-Nr. 106990-43-6), Bis(1,2,2,6,6-pentamethyl-4-piperidyl) decanedioate, Bis(1,2,2,6,6-pentamethyl-4-piperidyl) 2-(3,5-di-tert-butyl-4-hydroxybenzyl)-2-butyl malonate, Decanedioic acid, bis(2,2,6,6-tetramethyl-4-piperidinyl) ester, Reaktionsprodukte mit tert-Butylhydroperoxide und Octan (CAS-Nr 129757-67-1), Chimasorb 2020 (CAS-Nr 192268-64-7), Poly[[6-morpholino-1,3,5-triazine-2,4-diyl][(2,2,6,6-tetramethyl-4-piperidinyl)imino]-1,6-hexanediyl[(2,2,6,6-tetramethyl-4-piperidinyl)imino]], Poly[[6-(4-morpholinyl)-1,3,5-triazine-2,4-diyl][(1,2,2,6,6-pentamethyl-4-piperidinyl)imino]-1,6-hexanediyl[(1,2,2,6,6-pentamethyl-4-piperidinyl)imino]] (9CI), 3-Dodecyl-1-(2,2,6,6-tetramethyl-4-piperidyl)pyrrolidine-2,5-dione, 3-Dodecyl-1-(1,2,2,6,6-pentamethylpiperidin-4-yl)pyrrolidine-2,5-dione"4-Octadecanoyloxy-2,2,6,6-tetramethylpiperidine, Poly[[6-(cyclohexylamino)-1,3,5-triazine-2,4-diyl][(2,2,6,6-tetramethyl-4-piperidinyl)imino]-1,6-hexanediyl[(2,2,6,6-tetramethyl-4-piperidinyl)imino]], 1H,4H,5H,8H-2,3a,4a,6,7a,8a-Hexaazacyclopenta[def]fluorene-4,8-dione, hexahydro-2,6-bis(2,2,6,6-tetramethyl-4-piperidinyl)- (CAS-Nr 109423-00-9), N,N'-Bis(formyl)-N,N'-bis(2,2,6,6-tetramethyl-4-piperidyl)-1,6-hexanediamine, N-(tetramethyl-4-piperidinyl)-maleimide-C20-24-α-olefin copolymer (CAS-Nr 199237-39-3), Tetrakis(1,2,2,6,6-pentamethyl-4-piperidyl) 1,2,3,4-butanetetracarboxylate, Tetrakis(2,2,6,6-tetramethyl-4-piperidyl) 1,2,3,4-butanetetracarboxylate, 1,2,2,6,6-Pentamethyl-4-piperidinyl tridecyl 1,2,3,4-butanetetracarboxylate, (1,2,3,4-Butanetetracarboxylic acid, 2,2,6,6-tetramethyl-4-piperidinyl tridecyl ester), (2,4,8,10-Tetraoxaspiro[5.5]undecane-3,9-diethanol, β,β,β',β'-tetramethyl-, polymer with 1,2,3,4-butanetetracarboxylic acid) (CAS-Nr 115055-30-6), 2,2,4,4-Tetramethyl-21-oxo-7-oxa-3,20-diazadispiro[5.1.11.2]heneicosane, (7-Oxa-3,20-diazadispiro[5.1.11.2]heneicosane-20-propanoic acid, 2,2,4,4-tetramethyl-21-oxo-, tetradecyl ester), (7-Oxa-3,20-diazadispiro[5.1.11.2]heneicosan-21-one, 2,2,4,4-tetramethyl-20-(oxiranylmethyl)-), (Propanamide, N-(2,2,6,6-tetramethyl-4-piperidinyl)-3-[(2,2,6,6-tetramethyl-4-piperidinyl)amino]-), (1,3-Propanediamine, N,N"-1,2-ethanediylbis-, polymer with 2,4,6-trichloro-1,3,5-triazine, Reaktionsprodukte mit N-butyl-2,2,6,6-tetramethyl-4-piperidinamine) (CAS-Nr 136504-96-6), 1,1'-Ethylenebis(3,3,5,5-tetramethyl-2-piperazinone), (Piperazinone, 1,1',1"-[1,3,5-triazine-2,4,6-triyltris[(cyclohexylimino)-2,1-ethanediyl]]tris[3,3,5,5-tetramethyl-), (7-Oxa-3,20-diazadispiro[5.1.11.2]heneicosane-20-propanoic acid, 2,2,4,4-tetramethyl-21-oxo-, dodecyl ester), 1,1-Bis(1,2,2,6,6-pentamethyl-4-piperidyloxycarbonyl)-2-(4-methoxyphenyl)ethene, (2-Propenoic acid, 2-methyl-, methyl ester, polymer with 2,2,6,6-tetramethyl-4-piperidinyl 2-propenoate) (CAS-Nr 154636-12-1), (Propanamide, 2-methyl-N-(2,2,6,6-tetramethyl-4-piperidinyl)-2-[(2,2,6,6-tetramethyl-4-piperi-dinyl)amino]-), (D-Glucitol, 1,3:2,4-bis-O-(2,2,6,6-tetramethyl-4-piperidinylidene)-) (CAS-Nr 99473-08-2), N,N'-Bis(2,2,6,6-tetramethyl-4-piperidinyl)isophthalamide, 4-Hydroxy-2,2,6,6-tetramethylpiperidine, 1-Allyl-4-hydroxy-2,2,6,6-tetramethylpiperidine, 1-Benzyl-4-hydroxy-2,2,6,6-tetramethylpiperidine, 1-(4-tert.-Butyl-2-butenyl)-4-hydroxy-2,2,6,6-tetramethylpiperidine, 4-Stearoyloxy-2,2,6,6-tetramethylpiperidine, 1-Ethyl-4-salicyloyloxy-2,2,6,6-tetramethylpiperidine, 4-Methacryloyloxy-1,2,2,6,6-pentamethylpiperidine, 1,2,2,6,6Pentamethyl-piperidin-4-yl-β-(3,5-ditert.-butyl-4-hydroxyphenyl)-propionate, 1-Benzyl-2,2,6,6tetramethyl-4-piperidinylmaleinate, (Di-2,2,6,6-tetramethylpiperidin-4-yl)-adipate, (Di-2,2,6,6-tetramethylpiperidin-4-yl)-sebacate, (Di-1,2,3,3,6-tetramethyl-2,6-diethyl-piperidin-4-yl)sebacate, (Di-1-allyl-2,2,6,6-tetramethyl-piperidin-4-yl)phthalate, 1-Propargyl-4-β-cyanoethyloxy-2,2,6,6-tetramethylpiperidine, 1-Acetyl-2,2,6,6-tetramethylpiperidin-4-yl-acetate, (Trimellitic acid-tri-(2,2,6,6-tetramethylpiperidin-4-yl)ester), 1-Acryloyl-4-benzyloxy-2,2,6,6-tetramethyl-piperidine, Dibutyl-malonic acid-di- (1,2,2,6,6-pentamethyl-piperidin-4-yl)ester, Butyl-(3,5-di-tert-butyl-4-hydroxybenzyl)-malonic acid-di-(1,2,2,6,6-pentamethylpiperidin-4-yl)ester, Dibenzyl- malonic acid-di-(1,2,2,6,6-pentamethylpiperidin-4-yl)ester, Dibenzyl-malonic acid-di-(1,2,3,6-tetramethyl-2,6-diethyl-piperidin-4-yl)ester, Hexane-1',6'-bis- (4-carbamoyloxy-1-n-butyl-2,2,6,6-tetramethylpiperidine), Toluene-2',4'-bis- (4-carbamoyloxy-1-n-propyl-2,2,6,6-tetramethylpiperidine), Dimethyl-bis-(2,2,6,6-tetramethylpiperidine-4-oxy)silane, Phenyl-tris-(2,2,6,6-tetramethylpiperidine-4-oxy)silane, Tris-(1-propyl-2,2,6,6-tetramethylpiperidin-4-yl)phosphite, Tris-(1-propyl-2,2,6,6-tetramethylpiperidin-4-yl)phosphate, Phenyl-[bis-(1,2,2,6,6-pentamethylpiperidin-4-yl)phosphonate, Di(1,2,2,6,6-pentamethylpiperidin- 4-yl)sebacate, NN'-Bis-(2,2,6,6-tetramethylpiperidin-4-yl)hexamethylene- 1,6-diamine, NN'-Bis-(2,2,6,6-tetramethylpiperidin-4-yl)hexamethylene-1,6-diacetamide, 1-Acetyl-4-(N-cyclohexylacetamido)-2,2,6,6-tetramethylpiperidine, 4-Benzylamino-2,2,6,6-tetramethylpiperidine, N,N'-Bis-(2,2,6,6-tetramethylpiperidin-4-yl)-N,N'-dibutyladipamide, N,N'-Bis-(2,2,6,6-tetramethylpiperidin-4-yl)-N,N'-dicyclohexyl-(2-hydroxypropylene), NN'-Bis-(2,2,6,6-tetramethylpiperidin- 4-yl)-p-xylylenediamine, 4-(Bis-2-hydroxyethyl)-amino-1,2,2,6,6-pentamethylpiperidine, 4-(3-Methyl-4-hydroxy-5-tert.-butyl-benzoicacidamido)-2,2,6,6-tetramethylpiperidine, 4-Methacrylamino-1,2,2,6,6-pentamethylpiperidine, 9-Aza-8,8,10,10-tetramethyl-1,5-dioxaspiro[5.5]undecane, 9-Aza-8,8,10,10-tetramethyl-3-ethyl- 1,5-dioxaspiro[5.51undecane, 8-Aza-2,7,7,8,9,9-hexamethyl-1,4-dioxaspiro[4.5]decane, 9-Aza-3-hydroxymethyl-3-ethyl-8,8,9,10,10-pentamethyl-1-5-dioxaspiro[5.5]undecane, 9-Aza-3-ethyl-3-acetoxymethyl-9-acetyl-8,8,10,10-tetramethyl-1,5-dioxaspiro[5.5]undecane, 2,2,6,6-Tetramethylpiperidine-4-spiro-2'-(1',3'-dioxane)5'-spiro-5"-(1",3"-dioxane)2"-spiro4"-(2"',2"',6"',6"'-tetramethylpiperidine), 3-Benzyl-1,3,8-triaza-7,7,9,9-tetramethyl-spiro[4.5]decane-2,4-dione, 3-n-Octyl-1,3,8-triaza-7,7,9,9-tetramethyl-spiro[4.5]decane-2,4-dione, 3-Allyl-1,3,8-triaza-1,7,7,9,9-pentamethyl-spiro[4.5]decane-2,4.dione, 3-Glycidyl-1,3,8-triaza-7,7,8,9,9-pentamethyl-spiro[4.5]decane-2,4-dione, 2-Isopropyl-7,7,9,9-tetramethyl-1-oxa-3,8-diaza-4-oxyspiro[4.5]decane, 2-Butyl-7,7,9,9-tetramethyl-1-oxa-3,8-diaza-4-oxyspiro[4.5]decane, 2-Isopropyl-7,7,9,9-tetramethyl-1-oxa-4,8-diaza-oxyspiro[4.5]decane, 2-Butyl-7,7,9,9-tetramethyl-1-oxa-4,8-diaza-3-oxyspiro[4.5]decane, Bis-[β-(2,2,6,6-tetramethylpiperidino)-ethyl]-sebacate, α-(2,2,6,6-tetramethylpiperidino)-acetic acid-n-octyl-ester, 1,4-bis-(2,2,6,6-tetramethylpiperidino)-2-butene, N-Hydroxymethyl-N'-2,2,6,6-tetramethylpiperidin-4-yl-urea, N-Methoxymethyl-N'-2,2,6,6-tetramethylpiperidin-4-yl-urea, N-Methoxymethyl-N'-n-dodecyl-N'-2,2,6,6-tetramethylpiperidin-4-yl-urea, O-(2,2,6,6-Tetramethylpiperidin-4-yl)- N-methoxymethyl-urethane.
Phosphite und Phosphonate wie,
Tri(nonylphenyl) phosphite, Tris(2,4-di-tert-butylphenyl) phosphite, Bis(2,4-di-tert-butylphenyl) pentaerythritol diphosphite, Bis(2,6-di-tert-butyl-4-methylphenyl)pentaerythritol diphosphite, 2,2'-Methylenebis(4,6-di-tert-butylphenyl) octyl phosphite, Tetrakis(2,4-di-tert-butylphenyl)[1,1'-biphenyl]-4,4'-diylbisphosphonite, 2,2'-Ethylidenebis(4,6-di-tert-butylphenyl) fluorophosphite, Dioctadecyl pentaerythritol diphosphonite, 2-[[2,4,8,10-Tetrakis(1,1-dimethylethyl)dibenzo[d,f]-[1,3,2]dioxaphosphepin-6-yl]oxy]-N,N-bis[2-[[2,4,8,10-tetrakis(1,1-dimethylethyl)dibenzo-[d,f][1,3,2]dioxaphosphepin-6-yl]oxy]ethyl]ethanamine (CAS-Nr. 80410-33-9), Bis(2,4-di-tert-butyl-6-methylphenyl) ethyl phosphite, 2,4,6-Tri-tert-butylphenyl- 2-butyl-2-ethyl-1,3-propanediol phosphite, Bis(2,4-dicumylphenyl) pentaerythritol diphosphite,
Hydroxylamine wie,
Amines, bis(hydrogenated tallow alkyl), oxidized ,
Sekundäre Arylamine wie,
N-(2-Naphthyl)-N-phenylamine, 2,2,4-Trimethyl-1,2-dihydroquinoline polymer (CAS-Nr: 26780-96-1), N-2-Propyl-N'-phenyl-p-phenylenediamine, N-(1-Naphthyl)-N-phenylamine, (Benzenamine, N-phenyl-, Reaktionsprodukte mit 2,4,4-trimethylpentene) (CAS-Nr. 68411-46-1), 4-(1-Methyl-1-phenylethyl)-N-[4-(1-methyl-1-phenylethyl)phenyl]aniline.
Lactone und Benzofuranone wie,
Irganox HP 136 (CAS Nr. 181314-48-7)
Thioether und Thioester wie,
Distearyl-3,3-thiodipropionate, Dilauryl 3,3'-thiodipropionate, Ditetradecylthiodipropionate, Di-n-octadecyl disulfide.
UV-Absorber wie,
(Methanone, [methylenebis(hydroxymethoxyphenylene)]bis[phenyl-), (Methanone, [1,6-hexanediylbis[oxy(2-hydroxy-4,1-phenylene)]]bis[phenyl-), 2-Benzoyl-5-methoxyphenol, 2,4-Dihydroxybenzophenone, 2,2'-Dihydroxy-4-methoxybenzophenone, 2-Hydroxy-4-octyloxybenzophenone, 2-Hydroxy-4-dodecyloxybenzophenone, 2-(2-Hydroxy-4-hexyloxyphenyl)-4,6-diphenyl-1,3,5-triazine, 2,4-Bis(2,4-dimethylphenyl)-6-(2-hydroxy-4-octyloxyphenyl)-1,3,5-triazine, 2-Ethoxy-2'-ethyloxalic acid bisanilide, N-(5-tert-Butyl-2-ethoxyphenyl)-N'-(2-ethylphenyl)oxamide, Dimethyl (p-methoxybenzylidene)malonate, 2,2'-(1,4-Phenylene)bis[3,1-benzoxazin-4-one], N'-(4-Ethoxycarbonylphenyl)-N-methyl-N-phenylformamidine, 4-Methoxycinnamic acid 2-ethylhexyl ester, 4-Methoxycinnamic acid isoamyl-ester, 2-Phenylbenzimidazole-5-sulfonsäure, 2-Cyano-3,3-diphenylacrylic acid 2-ethylhexyl ester, 2-Ethylhexyl salicylate, 3-(4-Methylbenzylidene)bornan-2-one.

Die erfindungsgemäßen Zusammensetzungen weisen eine Viskosität bei 20 °C von 100 bis 3000 mPas, vorzugsweise 150 bis 2500 mPas, gemessen bei einer angelegten Scherkraft von 30 s^{-1,}, auf. Sie sind im allgemeine thixotrop, d.h. die Viskosität erniedrigt sich mit Erhöhung der Scherkraft.

Durch die Verwendung der erfindungsgemäßen Zusammensetzungen ist das PVC geschützt vor dem Befall durch Schimmelpilze.

Es seien beispielsweise Schimmelpilze der folgenden Gattung genannt, :
Alternaria, wie Alternaria tenuis,
Aspergillus, wie Aspergillus niger,
Chaetomium, wie Chaetomium globosum,
Coniophora, wie Coniophora puetana,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Trichoderma, wie Trichoderma viridae

Die erfinderischen Zusammensetzungen enthalten vorzugsweise mindestens:
a. 2 - 70 Gew.-% Thiabendazol als Wirkstoff
b. 20 - 97 Gew.-% eines oder mehrerer Weichmacher
c. 0,05 - 10 Gew.-% eines oder mehrerer Thixotropiermittel
und optional
0 - 40 Gew.-% eines oder mehrere weitere Fungizide,
0 - 30 Gew.-% eines oder mehrere Epoxide als Stabilisatoren,
sowie gegebenenfalls weitere Stabilisatoren und Hilfsstoffe.

In einer besonders bevorzugten Ausführungsform der Erfindung enthält die Zusammensetzung mindestens:
d. 4 - 50 Gew.-% Thiabendazol als Wirkstoff
e. 20 - 95 Gew.-% eines oder mehrerer Weichmacher
f. 0,05 - 5 Gew.-% eines oder mehrerer Thixotropiermittel
und optional
0 - 30 Gew.-% eines oder mehrere weitere Fungizide,
0 - 20 Gew.-% eines oder mehrere Epoxide als Stabilisatoren,
sowie gegebenenfalls weitere Stabilisatoren und Hilfsstoffe.

Bei dem auszurüstenden Material handelt es sich bevorzugt um polymere halogenhaltige Vinylverbindungen, wie z.B. Polyvinylchlorid (PVC) und Polyvinylidenchlorid oder Copolymere aus Vinylchlorid / Vinylidenchlorid, Vinylchlorid / Vinylacetat, Vinylidenchlorid / Vinylacetat.

Die Zusammensetzungen der polymeren halogenhaltigen Vinylverbindungen können auch weitere Kunststoffe enthalten, die beispielsweise als polymere Verarbeitungshilfsmittel oder Schlagzähverbesserer wirken. Diese weiteren Kunststoffe werden ausgewählt aus der Gruppe bestehend aus den Homo- und Copolymeren auf Basis von Ethylen, Propylen, Butadien, Vinylacetat, Glycidylacrylat, Glycidylmethacrylat, Acrylaten und Methacrylaten mit Alkoholkomponenten von verzweigten oder unverzweigten C₁- bis C₁₀-Alkoholen, Styrol oder Acrylnitril. Zu nennen sind insbesondere Polyacrylate mit gleichen oder verschiedenen Alkoholresten aus der Gruppe der C₄-bis C₈-Alkohole, besonders des Butanols, Hexanols, Octanols und 2-Ethylhexanols, Polymethylmethacrylat, Methyl-methacrylat-Butylacrylat-Copolymere, Methylmethacrylat-Butylmethacrylat-Copolymere, Ethylen-Vinylacetat-Copolymere, chloriertes Polyethylen, Nitrilkautschuk, Acrylnitril-Butadien-Styrol-Copolymere, Ethylen-Propylen-Copolymere, Ethylen-Propylen-Dien-Copolymere, Styrol-Acrylnitril-Copolymere, Acrylnitril-Butadien-Rubber, Styrol-Butadien-Elastomere und Methylmethacrylat-Styrol-Butadien-Copolymere.

Die erfindungsgemäßen Zusammensetzungen eignen sich aber auch zur Ausrüstung anderer thermoplastischer Kunststoffe, wie z.B. Polyethen (PE), Polypropen (PP), Polystyrol (PS), Polyacrylnitril (PAN), Polyamide (PA), Polyester (PES), Polyacrylate oder Zusammensetzungen hieraus.

Die erfindungsgemäßen Zusammensetzungen können nach bekannten Methoden in das PVC eingearbeitet werden, z.B. durch Extrusion oder Kalendrierung. Hierbei können die Zusammensetzungen entweder mit den Hilfsstoffen (Weichmacher, Stabilisatoren, Farben und Pigmente, Füllstoffe etc.) der PVC-Herstellung gemischt und dann eingearbeitet werden. Es ist aber auch möglich die Zusammensetzungen in das bereits fertige PVC einzuarbeiten. Die Methoden hierzu sind Stand der Technik und werden industriell breit eingesetzt.

Die Erfindung umfasst ebenfalls ein Verfahren zur Herstellung von polymeren Produkten aus Polyvinylchlorid, mindestens einem Thixotropiermittel, Thiabendazol und mindestens einem Weichmacher, bei dem durch Extrusion, Kalendrierung oder Kompoundierung die erfindungsgemäße Zusammensetzung aus mindestens einem Thixotropiermittel, Thiabendazol und mindestens einem Weichmacher in Polyvinylchlorid eingearbeitet wird.

Von der Erfindung ist ebenfalls ein Verfahren zur Herstellung der erfindungsgemäßen Zusammensetzungen umfasst, bei dem mindestens ein Thixotropiermittel, Thiabendazol und mindestens ein Weichmacher vermischt wird. Der Mischungsvorgang kann durch verrühren oder vermahlen durchgeführt werden und durch alle gängigen dem Fachmann aus dem Stand der Technik bekannten Compoundierungsverfahren. Bevorzugt werden die Zusammensetzungen durch Dispergierung vermischt. Besonders bevorzugt werden die Zusammensetzungen durch Dispergierung vermischt und in einem weiteren Schritt durch Dispergierapparate vermahlen. Entsprechende Verfahren und Geräte, wie z.B. Perlmühlen oder Stator-Rotor Dispergierapparate, sind aus dem Stand der Technik dem Fachmann bekannt.

Im Allgemeinen wird die erfindungsgemäßen Zusammensetzung enthaltend Thiabendazol, mindestens ein Weichmacher und mindestens ein Thixotropiermittel in einer Menge von 0,1 bis 10 Gew.-%, vorzugsweise 0,2 bis 5,0 Gew.-%, bezogen auf das zu schützende Polymer eingesetzt.

Im Allgemeinen wird die erfindungsgemäßen Zusammensetzung enthaltend Thiabendazol, mindestens ein Weichmacher und mindestens ein Thixotropiermittel in einer Menge von 0,1 bis 10 Gew.-%, vorzugsweise 0,2 bis 5,0 Gew.-%, bezogen auf das zu schützende Polyvinylchlorid eingesetzt.

Weiterhin sind von der Erfindung polymere Produkte enthaltend thermoplastische Polymere, Thiabendazol, mindestens ein Weichmacher und mindestens ein Thixotropiermittel, umfasst. Insbesondere ist von der Erfindung eine Mischung aus Polyvinylchlorid, Thiabendazol, mindestens einem Weichmacher und mindestens einem Thixotropiermittel, umfasst.

Die erfindungsgemäße Mischung bzw. das polymere Produkt aus mindestens einem thermoplastischen Polymer, insbesondere Polyvinylchlorid, Thiabendazol, mindestens einem Weichmacher und mindestens einem Thixotropiermittel wird nach den bekannten Verfahren weiter verarbeitet. Es wird verwendet zur Herstellung von Rohrleitungen, Kabeln, Draht-Ummantelungen, im Innenausbau, im Fahrzeug- und Möbelbau, in Bodenbelägen, medizinischen Artikeln, Lebensmittelverpackungen, Dichtungen, Planen, Folien, Verbundfolien, Folien für Verbundsicherheitsglas, insbesondere für den Fahrzeug-Bereich und den Architektur-Sektor, Kunstleder, Spielzeug, Verpackungsbehältern, Klebebandfolien, Bekleidung, Beschichtungen, sowie Fasern für Gewebe.

Die erfindungsgemäße Zusammensetzung eignet sich besonders zur Herstellung von Mischungen bzw. polymeren Produkten aus Polyvinylchlorid, Thiabendazol, mindestens einem Weichmacher und mindestens einem Thixotropiermittel, da die erfindungsgemäßen Zusammensetzungen eine hohe Sedimentationsstabilität aufweisen und daher ohne weitere technische Behandlung in Polymeren, insbesondere in Polyvinylchlorid, eingesetzt werden können. Des Weiteren ermöglicht die verbesserte Verteilung der Wirkstoffe in den Polymeren einen verbesserten Schutz gegen den Befall oder die Zerstörung der Polymere durch Mikroorganismen.

Daher ist von der Erfindung ebenfalls die Verwendung der erfindungsgemäßen Zusammensetzung zum Schutz von Polymeren, insbesondere zum Schutz von Polyvinylchlorid, gegen den Befall oder die Zerstörung durch Mikroorganismen, umfasst.

Zur Klarstellung sei angemerkt, dass vom Rahmen der Erfindung alle aufgeführten, allgemeinen oder in Vorzugsbereichen genannten Definitionen und Parameter in beliebigen Kombinationen umfasst sind.

### Beispiele

### Materialien und Abkürzungen

Luvotix^{®} R = hydriertes Rhizinusöl CAS-Nr. 8001-78-3 der Fa. Lehmann & Voss, Hamburg, Deutschland
Mesamoll^{®}= Alkylsulfonsäureester des Phenols
DINP = Diisononylphthalat
DIDP = Diisodecylphthalat
ESBO = Epoxidiertes Sojaöl CAS-Nr. 8013-07-8; Baerostab LSA, Fa. Baerlocher, Lingen, Deutschland
BHT = 2,6-Di-tert.-butyl-p-kresol
Ultranox^{®} 668 = Tris (2,4ditbutylphenyl)phosphite
Tinivin^{®} 292 = Zusammensetzung aus Bis(1,22,66-pentamethyl-4piperidyl)sebacate (CAS-Nr. 4155-26-7) und Methyl 1,2,2,6,6-pentamethy-4-piperidylsebacate (CAS-Nr. 82919-37-7
Tinuvin^{®} 384-2 = Benzenepropanoic acid, 3-(2H-benzotriazol-2-yl)-5-(1,1-dimethylethyl)-4-hydroxy-, C7-9-branched and linear alkyl esters (CAS Nr. 127519-17-9)
Vinnolit S 4170 = Suspensions-PVC für die thermoplastische Verarbeitung der Fa. Vinnolit GmbH & Co. KG, Deutschland
Irgastab^{®} CZ 11 = PVC Stabilisator auf Basis Calcium-Zinkcarboxylat
TBZ = Thiabendazol
OIT = Octylisothiazolinon
DCOIT = Dichloroctylisothiazolinon

### Vergleichsbeispiel 1

140,4 g Dichloroctylisothiazolinon (DCOIT) werden unter Rühren in 559,6 g Diisononylphthalat (DINP) gelöst. Man erhält 700 g einer gelben Lösung mit einem DCOIT Gehalt von 20 % (HPLC).

### Vergleichsbeispiel 2

140,0 g Octylisothiazolinon (OIT) werden unter Rühren in 560,0 g Diisononylphthalat (DINP) gelöst. Man erhält 700 g einer hellgelben Lösung mit einem OIT Gehalt von 20 % (HPLC).

### Beispiel 3

3g Luvotix^{®} R (Lehmann & Voss, Hamburg; hydriertes Rhizinusöl CAS-Nr. 8001-78-3) werden in 87g Diisodecylphthalat (DIDP) gelöst, 210g Thiabendazol (TBZ) und weitere 300 g DIDP werden am Dissolver eingearbeitet und 45min bei 4000U/min nachgerührt. Die flüssige Vordispersion wird dann zweimal über eine Kugelmühle (DYNO-Mühle Multi Lab) gemahlen. Man erhält eine stark thixotropierte, nach Aufrühren aber verarbeitbare Dispersion. Wirkstoffgehalt: 35,2 % (HPLC)

Nach 2 Monaten Lagerung bei 40 °C ist keine Sedimentation zu beobachten.

### Beispiel 4

0,6g Luvotix^{®} R (Lehmann & Voss, Hamburg; hydriertes Rhizinusöl CAS-Nr. 8001-78-3) werden in 79,4 g Mesamoll^{®} gelöst, 120g Thiabendazol (TBZ) und weitere 400 g Mesamoll^{®} werden am Dissolver eingearbeitet und 45min bei 4000U/min nachgerührt. Die flüssige Vordispersion wird dann zweimal über eine Kugelmühle (DYNO-Mühle Multi Lab) gemahlen. Man erhält eine thixotropierte, nach Aufrühren aber gut verarbeitbare Dispersion. Wirkstoffgehalt: 20,0 % (HPLC); Viskosität: 1533mPas/30,1s

Nach 2 Monaten Lagerung bei 40 °C ist keine Sedimentation zu beobachten.

### Beispiel 5

2,8g Luvotix^{®} R (Lehmann & Voss, Hamburg; hydriertes Rhizinusöl CAS-Nr. 8001-78-3) und 116,62 g N-Octylisothiazolinon werden in 930,58 g Diisononylphthalat (DINP) gelöst, 350 g Thiabendazol (TBZ) am Dissolver eingearbeitet und 45min bei 4000U/min nachgerührt. Die flüssige Vordispersion wird dann zweimal über eine Kugelmühle (DYNO-Mühle Multi Lab) gemahlen. Man erhält eine stark thixotropierte, nach Aufrühren aber verarbeitbare Dispersion.
Ausbeute: 1229 g
Viskosität: 1000mPas (30 1/s)
Gehalt (HPLC): 8,3% N-Octylisothiazolinon / 25,3% TBZ

Nach 2 Monaten Lagerung bei 40 °C ist Sedimentation < 2 % (klarer Überstand bezogen auf Gesamtfüllhöhe) zu beobachten.

### Beispiel 6

2,8g Luvotix^{®} R (Lehmann & Voss, Hamburg; hydriertes Rhizinusöl CAS-Nr. 8001-78-3) und 98g N-Octylisothiazolinon werden in 1005,2g Mesamoll^{®} gelöst, 294g Thiabendazol (TBZ) am Dissolver eingearbeitet und 45min bei 4000U/min nachgerührt. Die flüssige Vordispersion wird dann zweimal über eine Kugelmühle (DYNO-Mühle Multi Lab) gemahlen. Man erhält eine stark thixotropierte, nach Aufrühren aber verarbeitbare Dispersion.
Ausbeute: 1228 g
Viskosität: 1078mPas (30 1/s)
Gehalt (HPLC): 7,0% N-Octylisothiazolinon / 20,9% TBZ

Nach 2 Monaten Lagerung bei 40 °C ist keine Sedimentation zu beobachten.

### Beispiel 7

1,40g Luvotix^{®} R (Lehmann & Voss, Hamburg; hydriertes Rhizinusöl CAS-Nr. 8001-78-3), 28,13 g ESBO (Epoxidiertes Sojaöl; CAS-Nr. 8013-07-8) und 27 g Iodpropargylbutylcarbamat (IPBC) werden in 559,13 g Diisononylphthalat (DINP) gelöst, 135 g Thiabendazol (TBZ) am Dissolver eingearbeitet und 45min bei 4000U/min nachgerührt. Die flüssige Vordispersion wird dann zweimal über eine Kugelmühle (DYNO-Mühle Multi Lab) gemahlen. Man erhält eine stark thixotropierte, nach Aufrühren aber verarbeitbare Dispersion.
Ausbeute: 602 g
Viskosität: 1000mPas (30 1/s)
Gehalt (HPLC): 3,5% IPBC / 18,4% TBZ

Nach 2 Monaten Lagerung bei 40 °C ist keine Sedimentation zu beobachten.

### Beispiel 8

0,75g Luvotix^{®} R (Lehmann & Voss, Hamburg; hydriertes Rhizinusöl CAS-Nr. 8001-78-3) 21,0g ESBO und 21,6 g IPBC werden in 1251,6g Mesamoll^{®} gelöst, 105 g Thiabendazol (TBZ) am Dissolver eingearbeitet und 45min bei 4000U/min nachgerührt. Die flüssige Vordispersion wird dann zweimal über eine Kugelmühle (DYNO-Mühle Multi Lab) gemahlen. Man erhält eine stark thixotropierte, nach Aufrühren aber verarbeitbare Dispersion.
Ausbeute 1300g
Viskosität: 270 mPas (30 1/s)
Gehalt (HPLC): 1,5 % IPBC / 7,7 % TBZ

Nach 2 Monaten Lagerung bei 40 °C ist keine Sedimentation zu beobachten.

### Beispiel 9

1,13g Luvotix^{®} R (Lehmann & Voss, Hamburg; hydriertes Rhizinusöl CAS-Nr. 8001-78-3), 2,25 g BHT (2,6-Di-tert-butyl-*p*-kresol), 11,25 g ESBO und 11,25 g IPBC werden in 667,9g Mesamoll^{®} gelöst, 56,25g Thiabendazol (TBZ) am Dissolver eingearbeitet und 45min bei 4000U/min nachgerührt. Die flüssige Vordispersion wird dann zweimal über eine Kugelmühle (DYNO-Mühle Multi Lab) gemahlen. Man erhält eine stark thixotropierte, nach Aufrühren aber verarbeitbare Dispersion.
Ausbeute: 618 g
Viskosität: 243 mPas (30 1/s)
Gehalt (HPLC): 1,48% IPBC / 7,7% TBZ

Nach 2 Monaten Lagerung bei 40 °C ist keine Sedimentation zu beobachten.

### Beispiel 10

1,5g Luvotix^{®} R (Lehmann & Voss, Hamburg; hydriertes Rhizinusöl CAS-Nr. 8001-78-3), 0,75 g Ultranox 668, 11,25 g ESBO und 11,25 g IPBC werden in 669g Mesamoll^{®} gelöst, 56,25 g Thiabendazol (TBZ) am Dissolver eingearbeitet und 45min bei 4000U/min nachgerührt. Die flüssige Vordispersion wird dann zweimal über eine Kugelmühle (DYNO-Mühle Multi Lab) gemahlen. Man erhält eine stark thixotropierte, nach Aufrühren aber verarbeitbare Dispersion.
Ausbeute: 604g
Viskosität: 272 mPas (30 1/s)
Gehalt (HPLC): 1,5% IPBC / 7,7% TBZ

Nach 2 Monaten Lagerung bei 40 °C ist keine Sedimentation zu beobachten.

### Beispiel 11

0,75g Luvolix^{®} R (Lehmann & Voss, Hamburg; hydriertes Rhizinusöl CAS-Nr. 8001-78-3), 0,75 g Tinuvin 292, 11,25g ESBO und 11,25g IPBC werden in 669,8 g Mesamoll^{®} gelöst, 56,25 g Thiabendazol (TBZ) am Dissolver eingearbeitet und 45min bei 4000U/min nachgerührt. Die flüssige Vordispersion wird dann zweimal über eine Kugelmühle (DYNO-Mühle Multi Lab) gemahlen. Man erhält eine stark thixotropierte, nach Aufrühren aber verarbeitbare Dispersion.
Ausbeute: 618g
Viskosität: 275 mPas (30 1/s)
Gehalt (HPLC): 1,5 % IPBC / 7,7 % TBZ

Nach 2 Monaten Lagerung bei 40 °C ist keine Sedimentation zu beobachten.

### Beispiel 12

0,75g Luvotix^{®} R (Lehmann & Voss, Hamburg; hydriertes Rhizinusöl CAS-Nr. 8001-78-3), 0,75 g Tinuvin 384-2, 11,25 g ESBO und 11,25g IPBC werden in 669,8 g Mesamoll^{®} gelöst, 56,25 g Thiabendazol (TBZ) am Dissolver eingearbeitet und 45min bei 4000U/min nachgerührt. Die flüssige Vordispersion wird dann zweimal über eine Kugelmühle (DYNO-Mühle Multi Lab) gemahlen. Man erhält eine stark thixotropierte, nach Aufrühren aber verarbeitbare Dispersion.
Ausbeute: 615 g
Viskosität:270 mPas (30 1/s)
Gehalt (HPLC): 1,5 % IPBC / 7,5 % TBZ

Nach 2 Monaten Lagerung bei 40 °C ist Sedimentation < 2 % (klarer Überstand bezogen auf Gesamtfüllhöhe) zu beobachten.

### Beispiel 13

479,9 g Mesamol werden vorlegen und Luvotix^{®} R unter Rühren gelöst. Danach werden 60 g Propiconazol (zähes Öl) dazugegeben und am Dissolver bei 4000upm eingearbeitet. Danach werden 60 g Thiabendazol eintragen und 20Min bei 4000upm dispergiert und dann noch weitere 60 Min bei 3000upm gerührt. Die flüssige Vordispersion wird dann zweimal über eine Kugelmühle (DYNO-Mühle Multi Lab) gemahlen. Man erhält eine thixotropierte Dispersion. Wirkstoffgehalte:
Ausbeute 458,6g
Viskosität: 462,8mPas (30 1/s)
Gehalt (HPLC) 9,8% Propiconazol / 9,9% Thiabendazol

Nach 2 Monaten Lagerung bei 40 °C ist Sedimentation < 2 % (klarer Überstand bezogen auf Gesamtfüllhöhe) zu beobachten.

### Beispiel 14

50g Propiconazole werden vorlegt, 96,5g DINP am Dispermaten eingerührt und dann 0,5 g Luvotix^{®} R, 50g Thiabendazol und 300g weiteres DINP zugegeben und 45min nachgerührt bei 4000U/min am Dissolver.

Die flüssige Vordispersion wird dann zweimal über eine Kugelmühle (DYNO-Mühle Multi Lab) vermahlen. Man erhält eine dünnflüssige, leicht thixotrope Dispersion.
Viskosität: 323mPas (30 1/s)
Gehalt (HPLC): 9,9% Thiabendazol / 10,0% Propiconazol

Nach 2 Monaten Lagerung bei 40 °C ist Sedimentation < 2 % (klarer Überstand bezogen auf Gesamtfüllhöhe) zu beobachten.

### Beispiel 15

### Dispersion 1

0,6g Luvotix^{®} R werden in 46,3g Mesamoll^{®} gelöst, 153,1g Tebuconazole, weitere 400g Mesamoll^{®} dazu gegeben und am Dissolver eingearbeitet. Man rührt 45min bei 4000U/min nach.

Die flüssige Vordispersion wird dann zweimal über eine Kugelmühle (DYNO-Mühle Multi Lab) gefahren.

Man erhält 443g einer weiße Dispersion.
Viskosität: 2277mPas/30,1s
Gehalt (HPLC): 25,2% Tebuconazole

### Dispersion 2

0,6g Luvotix^{®} R werden in 79,4g Mesamol^{®}1 gelöst, 120 g Thiabendazol, weitere 400 g Mesamoll^{®} dazu gegeben und am Dissolver eingearbeitet. Man rührt 45min bei 4000U/min nach.

Die flüssige Vordispersion wird dann zweimal über eine Kugelmühle (DYNO-Mühle Multi Lab) gemahlen.

Man erhält 414g einer stark thixotropen, weißen Dispersion
Viskosität: 1533mPas/30,1s
Gehalt (HPLC): 20% Thiabendazol
25g Dispersion 1, 6,25g Mesamoll^{®} und 31,25 g Dispersion 2 werden gemischt und durch Rühren homogenisiert.
Gehalt (HPLC): 9,9% Thiabendazol / 10,0% Tebuconazole

Nach 6 Monaten Lagerung bei Raumtemperatur wird keine Sedimentation beobachtet.

### Beispiel 16

### Dispersion 1

0,6g Luvotix^{®} R werden in 69,4 g DINP gelöst, 180g Thiabendazol, weitere 350 g DINP dazu gegeben und am Dissolver eingearbeitet. Man rührt 45min bei 4000U/min nach.

Die flüssige Vordispersion wird dann zweimal über eine Kugelmühle (DYNO-Mühle Multi Lab) gefahren.

Man erhält 438,2g einer weißen, stark thixotropen Dispersion.
Viskosität: 3538mPas/30,1s
Gehalt (HPLC): 29,8% TBZ

### Dispersion 2

0,6g Luvotix^{®} R werden in 114,8 g DINP gelöst, 183,67 g Tebuconazole, weitere 300 g DINP dazu gegeben und am Dissolver eingearbeitet. Man rührt 45min bei 4000U/min nach.

Die flüssige Vordispersion wird dann zweimal über eine Kugelmühle (DYNO-Mühle Multi Lab) gefahren.

Man erhält 439g einer weißen, flüssigen Dispersion.
Viskosität: 2017mPas/30,1s
Gehalt (HPLC): 30,1% Tebuconazole
30g Dispersion 1 und 30 g Dispersion 2 werden gemischt und durch Rühren homogenisiert.
Gehalt (HPLC): 15,1% Thiabendazol / 14,7% Tebuconazole

Nach 6 Monaten Lagerung bei Raumtemperatur wird keine Sedimentation beobachtet.

### Beispiel 17

0,6g Luvotix^{®} R werden in 100 g Mesamoll^{®} angerührt, 100 g Thiabendazole und 20g Fludioxonil, sowie weitere 379,4g Mesamoll^{®} dazu gegebenen und am Dissolver eingearbeitet. Man rührt weitere 45min bei 4000U/min. Die flüssige Vordispersion wird dann zweimal über eine Kugelmühle (DYNO-Mühle Multi Lab) gemahlen. Man erhält 455 g einer flüssigen, leicht thixotropen Dispersion.
Viskosität: 1103mPas (30 1/s)
Gehalt (HPLC): 16,6% Thiabendazol, 3,3% Fludioxonil

Nach 6 Monaten Lagerung bei Raumtemperatur wird keine Sedimentation beobachtet.

### Beispiel 18

0,6g Luvotix^{®} R werden in 100g DINP angerührt, 125g Thiabendazole und 25g Fludioxonil, sowie weitere 349,4g DINP dazu gegebenen und am Dissolver eingearbeitet. Man rührt weitere 45min bei 4000U/min. Die flüssige Vordispersion wird dann zweimal über eine Kugelmühle (DYNO-Mühle Multi Lab) gemahlen. Man erhält 446,8g einer flüssigen, leicht thixotropen Dispersion.
Viskosität: 769mPas (30 1/s)
Gehalt (HPLC): 20,9% Thiabendazol, 4,1% Fludioxonil

Nach 6 Monaten Lagerung bei Raumtemperatur wird keine Sedimentation beobachtet.

### Beispiel 19

0,6g Luvotix^{®} R werden in 100g Mesamoll^{®} angerührt, 90 g Thiabendazole und 30 g Fludioxonil, sowie weitere 379,4 g Mesamoll^{®} dazu gegebenen und am Dissolver eingearbeitet. Man rührt weitere 45min bei 4000U/min. Die flüssige Vordispersion wird dann zweimal über eine Kugelmühle (DYNO-Mühle Multi Lab) gemahlen. Man erhält 447 g einer flüssigen, leicht thixotropen Dispersion.
Viskosität: 992mPas (30 1/s)
Gehalt (HPLC): 15,1% Thiabendazol, 4,9% Fludioxonil

Nach 6 Monaten Lagerung bei Raumtemperatur wird keine Sedimentation beobachtet.

### Beispiel 20

0,6g Luvotix^{®} R werden in 100 g DINP angerührt, 112,5 g Thiabendazole und 37,5 g Fludioxonil, sowie weitere 349,4 g DINP dazu gegebenen und am Dissolver eingearbeitet. Man rührt weitere 45min bei 4000U/min. Die flüssige Vordispersion wird dann zweimal über eine Kugelmühle (DYNO-Mühle Multi Lab) gemahlen. Man erhält 449 g einer flüssigen, leicht thixotropen Dispersion.
Viskosität: 751mPas (30 1/s)
Gehalt (HPLC): 18,8% Thiabendazol, 6,2% Fludioxonil

Nach 6 Monaten Lagerung bei Raumtemperatur wird keine Sedimentation beobachtet.

### Beispiel 21 (Einarbeitung der Dispersionen in PVC)

100 Teile Vinnolit S 4170
3,0 Teile Irgastab CZ 11
4,0 Teile ESBO (Epoxidiertes Sojaöl)
54 Teile DINP (Diisononylphthalat)
X Teile der erfindungsgemäßen Dispersion (s. Tabelle 3)
werden in einem Plastikbecher intensiv miteinander vermischt und anschließend über einen 180 °C warmen Kalander homogenisiert. Aus den erhaltenen, abgekühlten Fellen werden anschließend Prüfkörpern von 200 x 200 x 2 mm hergestellt.

**Tabelle 3 (Hersteller der PVC Prüfkörper)**

| **Bsp. Nr.** | **Eingesetzte Dispersion aus Bsp. Nr.** | **Teile in der PVC Rezeptur (s.o.)** | **Gesamtwirkstoffgehalt in ppm** |
|---|---|---|---|
| 21-1 | keine | 0 | 0 |
| 21-2 | 1 | 0,81 | 1000 |
| 21-3 | 1 | 0,60 | 750 |
| 21-4 | 2 | 0,81 | 1000 |
| 21-5 | 2 | 0,60 | 750 |
| 21-6 | 13 | 1,64 | 2000 |
| 21-7 | 13 | 1,21 | 1500 |
| 21-8 | 13 | 0,81 | 1000 |
| 21-9 | 14 | 1,61 | 2000 |
| 21-10 | 14 | 1,21 | 1500 |
| 21-11 | 14 | 0,81 | 1000 |
| 21-12 | 15 | 1,61 | 2000 |
| 21-13 | 15 | 1,21 | 1500 |
| 21-14 | 15 | 0,81 | 1000 |
| 21-15 | 16 | 1,61 | 2000 |
| 21-16 | 16 | 1,07 | 1500 |
| 21-17 | 16 | 0,54 | 1000 |
| 21-18 | 7 | 1,43 | 2000 |
| 21-19 | 7 | 1,07 | 1500 |
| 21-20 | 7 | 0,72 | 1000 |
| 21-21 | 17 | 0,81 | 1000 |
| 21-22 | 17 | 1,21 | 1500 |
| 21-23 | 17 | 1,61 | 2000 |
| 21-24 | 18 | 0,64 | 1000 |
| 21-25 | 18 | 0,97 | 1500 |
| 21-26 | 18 | 1,29 | 2000 |
| 21-27 | 19 | 0,81 | 1000 |
| 21-28 | 19 | 1,21 | 1500 |
| 21-29 | 19 | 1,61 | 2000 |
| 21-30 | 20 | 0,64 | 1000 |
| 21-31 | 20 | 0,97 | 1500 |
| 21-32 | 20 | 1,29 | 2000 |
| 21-45 | 6 | 0,58 | 1000 |
| 21-46 | 6 | 0,86 | 1500 |
| 21-47 | 6 | 1,15 | 2000 |
| 21-48 | 5 | 0,48 | 1000 |
| 21-49 | 5 | 0,73 | 1500 |
| 21-50 | 5 | 0,97 | 2000 |

### Beispiel 23 (Schimmelfestigkeit der PVC Proben)

Die Proben wurden in Anlehnung an ISO 846 auf ihre biologische Wirkung hin geprüft.

Die PVC-Muster aus Beispiel 26 werden jeweils in 2 x 2 cm Stücke geschnitten, ein Prüfkörper wird 120 h in fließendem Wasser gealtert, der andere ohne Vorbehandlung in die Prüfung gegeben.

Die Prüfkörper werden auf einen Malzagar (in Petrischalen) aufgelegt, der mit einer gemischten Sporensuspension aus Penicillium funicolosum (ATCC 36839), Chaetomium globosum (ATCC 6205), Trichoderma longibrachiatum (ATCC 9645), Paecilomyces variotii (ATCC 18502) und Aspergillus niger (ATCC 6275) kontaminiert ist und zwei Wochen bei 26 °C und 80 % rel. Luftfeuchtigkeit inkubiert.

Anschließend wird das Pilzwachstum auf den Agarplatten unter einer Stereolupe untersucht und gemäß dem folgenden Schema bewertet:

**Tabelle 4 (Bewertungsschema)**

| **Bewertung** | **Beschreibung** |
|---|---|
| 0 | unzureichende Schimmelfestigkeit |
| | Probe > 10 % überwachsen |
| 1 | moderate Schimmelfestigkeit |
| | Probe ist bis maximal 10 % überwachsen |
| 2 | gute Schimmelfestigkeit |
| | Probe nicht bewachsen oder nur am Rand, kein Hemmhof um den Prüfkörper |
| 3 | sehr gute Schimmelfestigkeit |
| | Probe nicht bewachsen, es ist ein Hemmhof um den Prüfkörper zu beobachten |

Für die geprüften Muster ergaben sich folgende Bewertungen:

**Tabelle 5 (Biologische Bewertung der Schimmelfestigkeit)**

| **Muster aus Bsp. Nr.** | **Bewertung ohne Wässerung** | **Bewertung nach Wässerung (120 h)** | **Gesamtwirkstoffgehaltt in ppm** |
|---|---|---|---|
| 21-1 (Nullprobe) | 0 | 0 | 0 |
| 21-2 (Vergleich 1) | 0 | 0 | 1000 |
| 21-3 (Vergleich 1) | 0 | 0 | 750 |
| 21-4 (Vergleich 2) | 1-2 | 0-1 | 1000 |
| 21-9 | 2 | 2 | 2000 |
| 21-10 | 2 | 2 | 1500 |
| 21-11 | 2 | 2 | 1000 |
| 21-17 | 2 | 2 | 1000 |
| 22-20 | 3 | 3 | 1000 |
| 21-24 | 2 | 2 | 1000 |
| 21-25 | 2 | 2 | 1500 |
| 21-26 | 2 | 2 | 2000 |
| 21-30 | 2 | 2 | 1000 |
| 21-31 | 2 | 2 | 1500 |
| 21-32 | 2 | 2 | 2000 |
| 21-48 | 2 | 2 | 1000 |
| 21-49 | 2 | 2 | 1500 |
| 21-50 | 2 | 2 | 2000 |

## Patentansprüche

1. Zusammensetzung enthaltend Thiabendazol, dessen Salze oder Säureadditionsverbindungen, mindestens einen Weichmacher und mindestens ein rizinusölderivatehaltiges Thixotropiermittel.

2. Zusammensetzung gemäß Anspruch 1, **dadurch gekennzeichnet, dass** als Rizinusölderivate Mono- Di oder Triglyceride der (12*R*)-*cis*-12-Hydroxyoctadec-9-ensäure, der (9*Z*,12*R*)-12-Hydroxyoctadec-9-ensäure oder der 12-Hydroxyoctadecansäure eingesetzt werden, Ester oder Amide der Rizinolsäure oder deren Salze, hydriertes Rizinusöl, sulfatiertes Rizinusöl (CAS 8002-33-3), mit Polyamiden oder Fettsäureamiden derivatisiertes Rizinusöl, anorganisch modifiziertes Rizinusöl oder silikatmodifiziertes Rizinusöl eingesetzt wird.

3. Zusammensetzung gemäß Anspruch 1 oder 2, **dadurch gekennzeichnet, dass** als Thixotropiermittel hydriertes oder sulfatiertes Rizinusöl (CAS 8002-33-3) eingesetzt wird.

4. Zusammensetzung gemäß Anspruch 1, **dadurch gekennzeichnet, dass** die Zusammensetzung zusätzlich mindestens ein iodhaltiges Fungizid und mindestens ein Epoxid enthält.

5. Zusammensetzung gemäß Anspruch 4, **dadurch gekennzeichnet, dass** das iodhaltige Fungizid 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyldicarbamat, 3-Iod-2-propinyloxyethanol-ethy lcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethylcarbamat, 3-Iod-2-propinyl-n-hexylcarbamat, 3-Iod-2-propinyl-cyclohexylcarbamat oder Diiodmethyl-p-tolysulfon ist.

6. Zusammensetzung gemäß Anspruch 4 oder 5, **dadurch gekennzeichnet, dass** das Epoxid ausgewählt ist aus der Gruppe Leinölepoxidate, Vernoniaölepoxidate, Sonnenblumenölepoxidate und Sojaölepoxidate.

7. Zusammensetzung gemäß einem oder mehreren der Ansprüche 4 bis 6, **dadurch gekennzeichnet, dass** weitere Stabilisatoren ausgewählt aus der Gruppe der sterisch gehinderten Amine und Phenole, Ester der ß-(3,5-Di-tert.butyl-4hydroxyphenyl)-propionsäure mit ein- oder mehrwertigen Alkoholen, Ester der ß-(5-tert.-butyl-4-hydroxy-3-methylphenyl)-propionsäure mit ein- oder mehrwertigen Alkoholen, Phosphite, Phosphonate, UV-Absorber, sekundäre Arylamine, Lactone, Benzofuranone, Thioether und Thioester eingesetzt werden.

8. Zusammensetzung gemäß einem oder mehreren der Ansprüche 1 bis 7, **dadurch gekennzeichnet, dass** die Zusammensetzung mindestens ein weiteres Fungizid ausgewählt aus der Gruppe Azaconazol, Bromuconazol, Cyproconazol, Dichlobutrazol, Diniconazol, Difenconazol, Hexaconazol, Metaconazol, Penconazol, Propiconazol, Tebuconazol, Azoxystrobin, Fludioxonil, Dichlofluanid, Tolylfluanid, Fluorfolpet, Methfuroxam, Carboxin, Fenpiclonil, Butenafin, Imazalil, N-Octylisothiazolin-3-on, Dichlor-N-octylisothiazolinon, Mercaptobenzthiazol, Thiocyanatomethyl-thiobenzothiazol, N-Butyl-benzisothiazolinon, 1-Hydroxy-2-pyridinthion (und ihre Cu-, Na-, Fe-, Mn-, Zn-Salze), Tetrachlor-4-methylsulfonylpyridin, 3-Iodo-2-propinyl-n-butylcarbamat, Diiodmethyl-p-tolylsulfon, Bethoxazin, 2,4,5,6-Tetrachlorisophthalodinitril und Carbendazim enthält:

9. Zusammensetzung gemäß einem oder mehreren der Ansprüche 1 bis 8, **dadurch gekennzeichnet, dass** die Zusammensetzung mindestens 2 - 70 Gew.-% Thiabendazol, 20 - 97 Gew.-% mindestens eines Weichmachers und 0,05 - 10 Gew.-% mindestens eines rizinusölderivatehaltiges Thixotropiermittels enthält.

10. Zusammensetzung gemäß Anspruch 1, **dadurch gekennzeichnet, dass** als Weichmacher mindestens ein epoxidiertes Fettsäureglycerid, epoxidierter Fettsäureester oder epoxidierte Fettsäure oder ein Gemisch aus diesen Verbindungen eingesetzt wird.

11. Polymeres Produkt enthaltend mindestens ein thermoplastisches Polymer und eine Zusammensetzung gemäß Anspruch 1.

12. Polymeres Produkt nach Anspruch 11 enthaltend Polyvinylchlorid als thermoplastischen Polymer.

13. Verfahren zur Herstellung des polymeren Produkts gemäß Anspruch 11 oder 12, **dadurch gekennzeichnet, dass** die Zusammensetzungen gemäß Anspruch 1 mit dem thermoplastischen Polymer vermischt und eingearbeitet werden.

14. Verwendung der Zusammensetzung gemäß Anspruch 1 zur Herstellung von gegen den Befall und die Zerstörung durch Mikroorganismen geschützten polymeren Produkten auf Basis thermoplastischer Polymere.

## Claims

1. Composition comprising thiabendazole, its salts or acid addition compounds, at least one plasticizer and at least one thixotropic agent containing castor oil derivatives.

2. Composition according to Claim 1, **characterized in that** the castor oil derivatives used are mono-, di- or triglycerides of (12*R*)-*cis*-12-hydroxyoctadec-9-enoic acid, of (9*Z*,12*R*)-12-hydroxyoctadec-9-enoic acid or of 12-hydroxyoctadecanoic acid, esters or amides of ricinoleic acid or their salts, hydrogenated castor oil, sulphated castor oil (CAS 8002-33-3), castor oil derivatized with polyamides or fatty acid amides, inorganically modified castor oil or silicate-modified castor oil.

3. Composition according to Claim 1 or 2, **characterized in that** the thixotropic agent used is hydrogenated or sulphated castor oil (CAS 8002-33-3).

4. Composition according to Claim 1, **characterized in that** the composition additionally comprises at least one iodine-containing fungicide and at least one epoxide.

5. Composition according to Claim 4, **characterized in that** the iodine-containing fungicide is 3-iodo-2-propynyl propylcarbamate, 3-iodo-2-propynyl butylcarbamate (IPBC), 3-iodo-2-propynyl m-chlorophenylcarbamate, 3-iodo-2-propynyl phenylcarbamate, di-(3-iodo-2-propynyl) hexyldicarbamate, 3-iodo-2-propynyloxyethanol ethylcarbamate, 3-iodo-2-propynyloxyethanol phenylcarbamate, 3-iodo-2-propynylthioxo thioethylcarbamate, 3-iodo-2-propynyl carbamate (IPC), 3-bromo-2,3-diiodo-2-propenyl ethylcarbamate, 3-iodo-2-propynyl n-hexylcarbamate, 3-iodo-2-propynyl cyclohexyl-carbamate or diiodomethyl-p-tolylsulfone.

6. Composition according to Claim 4 or 5, **characterized in that** the epoxide is selected from the group consisting of linseed oil epoxidates, vernonia oil epoxidates, sunflower oil epoxidates and soybean oil epoxidates.

7. Composition according to one or more of Claims 4 to 6, **characterized in that** further stabilizers selected from the group of the sterically hindered amines and phenols, esters of ß-(3,5-di-tert-butyl-4-hydroxyphenyl)propionic acid with mono- or polyhydric alcohols, esters of ß-(5-tert-butyl-4-hydroxy-3-methylphenyl) propionic acid with mono- or polyhydric alcohols, phosphites, phosphonates, UV absorbers, secondary arylamines, lactones, benzofuranones, thioethers and thioesters are employed.

8. Composition according to one or more of Claims 1 to 7, **characterized in that** the composition comprises at least one further fungicide selected from the group consisting of azaconazole, bromuconazole, cyproconazole, dichlobutrazole, diniconazole, difenconazole, hexaconazole, metaconazole, penconazole, propiconazole, tebuconazole, azoxystrobin, fludioxonil, dichlofluanid, tolylfluanid, fluorfolpet, methfuroxam, carboxin, fenpiclonil, butenafin, imazalil, N-octylisothiazolin-3-one, dichloro-N-octylisothiazolinone, mercaptobenzothiazole, thiocyanatomethyl-thiobenzothiazole, N-butyl-benzisothiazolinone, 1-hydroxy-2-pyridinethione (and their Cu, Na, Fe, Mn, Zn salts), tetrachloro-4-methylsulfonylpyridine, 3-iodo-2-propynyl n-butylcarbamate, diiodomethyl-p-tolylsulfone, bethoxazin, 2,4,5,6-tetrachloroisophthalodinitrile and carbendazim.

9. Composition according to one or more of Claims 1 to 8, **characterized in that** the composition comprises at least 2 - 70% by weight of thiabendazole, 20 - 97% by weight of at least one plasticizer and 0.05 - 10% by weight of at least one thixotropic agent containing castor oil derivatives.

10. Composition according to Claim 1, **characterized in that** the plasticizer used is at least one epoxidized fatty acid glyceride, epoxidized fatty acid ester or epoxidized fatty acid or a mixture of these compounds.

11. Polymeric product comprising at least one thermoplastic polymer and a composition according to Claim 1.

12. Polymeric product according to Claim 11, comprising polyvinyl chloride as thermoplastic polymer.

13. Process for preparing the polymeric product according to Claim 11 or 12, **characterized in that** the compositions according to Claim 1 are mixed with and incorporated into the thermoplastic polymer.

14. Use of the composition according to Claim 1 for preparing polymeric products which are based on thermoplastic polymers and protected against attack and destruction by microorganisms.

## Revendications

1. Composition contenant du thiabendazole, ses sels ou ses composés d'addition acide, au moins un plastifiant et au moins un agent thixotropique contenant un dérivé d'huile de ricin.

2. Composition selon la revendication 1, **caractérisée en ce que** des mono-, di- ou triglycérides de l'acide (12R)-cis-12-hydroxyoctadéc-9-énoïqe, de l'acide (9Z, 12R)-12-hydroxyoctadéc-9-énoïque ou de l'acide 12-hydroxyoctadécanoïque, des esters ou des amides de l'acide ricinoléique ou leurs sels, de l'huile de ricin hydrogénée, de l'huile de ricin sulfatée (n° CAS 8002-33-3), de l'huile de ricin dérivée avec des polyamides ou des amides d'acides gras, de l'huile de ricin modifiée inorganiquement ou de l'huile de ricin modifiée par un silicate sont utilisés en tant que dérivés d'huile de ricin.

3. Composition selon la revendication 1 ou 2, **caractérisée en ce que** de l'huile de ricin hydrogénée ou sulfatée (n° CAS 8002-33-3) est utilisée en tant qu'agent thixotropique.

4. Composition selon la revendication 1, **caractérisée en ce que** la composition contient en outre au moins un fongicide contenant de l'iode et au moins un époxyde.

5. Composition selon la revendication 4, **caractérisée en ce que** le fongicide contenant de l'iode est le carbamate de 3-iodo-2-propynyl-propyle, le carbamate de 3-iodo-2-propynyl-butyle (IPBC), le carbamate de 3-iodo-2-propynyl-m-chlorophényle, le carbamate de 3-iodo-2-propynyl-phényle, le dicarbamate de di-(3-iodo-2-propynyl)hexyle, le carbamate de 3-iodo-2-propynyloxyéthanol-éthyle, le carbamate de 3-iodo-2-propynyl-oxyéthanol-phényle, le carbamate de 3-iodo-2-propynyl-thioxo-thioéthyle, l'ester de l'acide 3-iodo-2-propynyl-carbamique (IPC), le carbamate de 3-bromo-2,3-diiodo-2-propényléthyle, le carbamate de 3-iodo-2-propynyl-n-hexyle, le carbamate de 3-iodo-2-propynyl-cyclohexyle ou la diiodométhyl-p-tolysulfone.

6. Composition selon la revendication 4 ou 5, **caractérisée en ce que** l'époxyde est choisi dans le groupe constitué par les époxydates d'huile de lin, les époxydates d'huile de vernonia, les époxydates d'huile de tournesol et les époxydates d'huile de soja.

7. Composition selon une ou plusieurs des revendications 4 à 6, **caractérisée en ce que** des stabilisateurs supplémentaires choisis dans le groupe constitué par les phénols et les amines à encombrement stérique, les esters de l'acide β-(3,5-di-tert.-butyl-4-hydroxyphényl)-propionique avec des alcools mono- ou polyvalents, les esters de l'acide β-(5-tert.-butyl-4-hydroxy-3-méthylphényl)-propionique avec des alcools mono- ou polyvalents, les phosphites, les phosphonates, les absorbeurs UV, les arylamines secondaires, les lactones, les benzofuranones, les thioéthers et les thioesters sont utilisés.

8. Composition selon une ou plusieurs des revendications 1 à 7, **caractérisée en ce que** la composition contient au moins un fongicide supplémentaire choisi dans le groupe constitué par l'azaconazole, le bromuconazole, le cyproconazole, le dichlobutrazole, le diniconazole, le difenconazole, l'hexaconazole, le métaconazole, le penconazole, le propiconazole, le tébuconazole, l'azoxystrobine, le fludioxonil, le dichlofluanide, le tolylfluanide, le fluorfolpet, le méthfuroxam, la carboxine, le fenpiclonil, la buténafine, l'imazalil, la N-octylisothiazolin-3-one, la dichloro-N-octylisothiazolinone, le mercaptobenzothiazole, le thiocyanatométhyl-thiobenzothiazole, la N-butyl-benzisothiazolinone, la 1-hydroxy-2-pyridinethione (et ses sels de Cu, Na, Fe, Mn, Zn), la tétrachloro-4-méthylsulfonylpyridine, le carbamate de 3-iodo-2-propynyl-n-butyle, la diiodométhyl-p-tolylsulfone, la béthoxazine, le 2,4,5,6-tétrachloroisophtalodinitrile et le carbendazime.

9. Composition selon une ou plusieurs des revendications 1 à 8, **caractérisée en ce que** la composition contient au moins 2 à 70 % en poids de thiabendazole, 20 à 97 % en poids d'au moins un plastifiant et 0,05 à 10 % en poids d'au moins un agent thixotropique contenant un dérivé d'huile de ricin.

10. Composition selon la revendication 1, **caractérisée en ce qu'**au moins un glycéride d'acide gras époxydé, un ester d'acide gras époxydé ou un acide gras époxydé ou un mélange de ces composés est utilisé en tant que plastifiant.

11. Produit polymère contenant au moins un polymère thermoplastique et une composition selon la revendication 1.

12. Produit polymère selon la revendication 11, contenant du polychlorure de vinyle en tant que polymère thermoplastique.

13. Procédé de fabrication du produit polymère selon la revendication 11 ou 12, **caractérisé en ce que** les compositions selon la revendication 1 sont mélangées et incorporées avec le polymère thermoplastique.

14. Utilisation de la composition selon la revendication 1 pour la fabrication de produits polymères à base de polymères thermoplastiques protégés contre l'infestation et la destruction par des microorganismes.
